(19) Europäisches Patentamt / European Patent Office / Office européen des brevets

(11) EP 2 598 619 B1

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(21) Anmeldenummer: **11728821.7**

(22) Anmeldetag: **27.06.2011**

(51) Int Cl.:
***C10M 149/02*** $^{(2006.01)}$ ***C10M 149/06*** $^{(2006.01)}$

(86) Internationale Anmeldenummer:
**PCT/EP2011/060670**

(87) Internationale Veröffentlichungsnummer:
**WO 2012/013432 (02.02.2012 Gazette 2012/05)**

(54) **POLYALKYL(METH)ACRYLAT ZUR VERBESSERUNG VON SCHMIERÖLEIGENSCHAFTEN**

POLYALKYL(METH)ACRYLATES FOR IMPROVING THE PROPERTIES OF LUBRICANTS

POLYALKYL(METH)ACRYLATES POUR L'IMPROVEMENT DES CHARACTERISTIQUES DES LUBRIFIANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2010 DE 102010038615**

(43) Veröffentlichungstag der Anmeldung:
**05.06.2013 Patentblatt 2013/23**

(73) Patentinhaber: **Evonik Oil Additives GmbH**
**64293 Darmstadt (DE)**

(72) Erfinder:
- **EISENBERG, Boris**
  **64646 Heppenheim (DE)**
- **JANSSEN, Dieter**
  **64823 Groß-Umstadt (DE)**
- **SUCHERT, Ellen**
  **64625 Bensheim (DE)**
- **STIHULKA, Miriam Kathrin**
  **63477 Maintal (DE)**
- **VOIGT, Lucas**
  **64331 Weiterstadt (DE)**

(56) Entgegenhaltungen:
**EP-A2- 0 841 157** **WO-A2-2006/066649**
**DE-A1- 4 330 971** **DE-A1-102007 031 247**
**GB-A- 982 077** **US-A- 4 668 412**

- **DATABASE WPI Week 200457 Thomson Scientific, London, GB; AN 2004-581533 XP000002656507, & CN 1 486 997 A (UNIV EAST CHINA SCI & TECHNOLOGY) 7. April 2004 (2004-04-07)**
- **NI, SHENG-CHUNG ET AL: "Chemical and physical adsorption of polymers containing thiophosphate, amino, or polysiloxane groups at the oil/metal interface under extreme pressure", JOURNAL OF POLYMER SCIENCE, PART A: POLYMER CHEMISTRY , VOLUME DATE 2003, 41(1), 106-115 CODEN: JPACEC; ISSN: 0887-624X, 2002, XP000002656508,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 598 619 B1

**Beschreibung**

Die vorliegende Erfindung betrifft Polyalkyl(meth)acrylate zur Verbesserung von Schmieröleigenschaften. Darüber hinaus beschreibt die vorliegende Erfindung Verfahren zur Herstellung und Verwendung dieser Polyalkyl(meth)acrylate.

Die Effizienz von modernen Getrieben, Motoren oder Hydraulikpumpen hängt neben der Beschaffenheit der Maschinenteile auch stark von den Reibeigenschaften des eingesetzten Schmierstoffes ab. Für die Entwicklung solcher Schmierstoffe ist es von besonderer Bedeutung, Kenntnis über die Wirkung der eingesetzten Schmierstoffkomponenten in Bezug auf Filmbildung und Reibung zu haben, wobei die Wahl geeigneter Additive z.B. dazu führen kann, den durchschnittlichen Kraftstoffverbrauch eines Fahrzeugs um einige Prozent zu senken. Als besonders wirkungsvolle Bestandteile eines Schmierstoffs können hierbei Grundöle mit besonders niedriger Viskosität und damit niedriger inherenter Reibung sowie organische Reibverminderer (*Friction Modifiers*) genannt werden. Ein Beispiel für diesen Trend ist die neueste Generation von sog. Leichtlauf-Motorenölen der SAE Klassen 5W-20, SAE 5W-30 oder SAE 0W-20, der sich in analoger Weise auch bei Ölen für manuelle und automatische Getriebe finden lässt.

Durch eine Entwicklung parallel zu den Kraftstoffsparenden Schmierstoffen ist der Einsatz von reibmindernden Additiven noch wichtiger geworden: Heutige Getriebe- und Pumpengehäuse sind in ihren Ausmaßen deutlich kleiner, sie werden schlechter gekühlt und sowohl Zahnräder als auch Lager müssen höhere Lasten tragen.

Neuerdings werden als Additive zur Verbesserung des Reibwertes Copolymere auf Basis von (Meth)acrylaten beschrieben, die einen blockartigen Aufbau aufweisen. So beschreiben insbesondere die Druckschriften WO2004087850A1, WO2006105926A1 und WO2009019065A2 Polymere mit mindestens einem polaren und mindestens einem unpolaren Segment, die zu einer Steigerung der Schmieröleigenschaften führen. Nachteilig an diesen Polymeren ist jedoch der relativ hohe Aufwand, der zur Herstellung dieser Additive betrieben werden muss.

Darüber hinaus sind Polymere bekannt, die zu einer Dispergierung von der Russpartikeln im Schmieröl führen, die unter anderem Monomer-Einheiten enthalten können, die von Amin-Derivaten der Maleinsäure abgeleitet sind. Derartige Polymere werden unter anderem in DE 102007031247 A1, WO 2007/070845 A2, US 2004/0254080 A1 und US 5,942,471 dargelegt.

Die Druckschrift DE 102007031247 A1 beschreibt Polyalkyl(meth)acrylat (PAMA)- Copolymere mit Maleinsäureanhydrid (MSA), bei denen die MSA-Gruppen mit Aminen umgesetzt werden, insbesondere mit N-Phenyl-1,4-Phenylendiamin (DPA). In diesem Dokument wird insbesondere die Verwendung der Polymere als Dispergiermittel zur Dispergierung von Russ dargelegt. Eine Verbesserung der Reibeigenschaften dieser Polymere wird nicht beschrieben. Die Zusammensetzung der Polymere beschränkt sich auf reine Methacrylat- und Acrylatcopolymere mit MSA.

Das Dokument WO 2007/070845 A2 beschreibt Umsetzungsprodukte mit Aminen auf Basis von MSA-haltigen PAMAs. Die in WO 2007/070845 A2 beschriebenen Polymere werden in Kombination mit einem Dispergiermittel in einem Grundöl eingesetzt, wobei das resultierende Schmiermittel insbesondere zur Erniedrigung des Kraftstoffverbrauches (fuel-economy) in einem definierten Prüfstandsmotorentest führt.

US 2004/0254080 A1 beschreibt MSA-haltige PAMA-Copolymere, die z.T. mit Aminen umgesetzt werden. Eine verbesserte Wirkung bzgl. Reibwert, Dispergierwirkung oder Verschleißverhalten wird nicht erwähnt.

US 5,942,471 beschreibt OCP VI-Verbesserer, die mit MSA gepfropft und anschließend mit Aminen, u.a. DPA, umgesetzt werden. Alternative Chemien wie Epoxid-Gruppen zur Einbringung des Amins werden nicht erwähnt. Beschrieben wird ferner die Antioxidative Wirkung der Polymere, verminderter Viskositätsanstieg bei Russeintrag in das Öl und verbessertes Verschleißverhalten bei Russhaltigen Ölen infolge der verbesserten Russdispergierung.

Die zuvor dargelegten Polymere führen bereits zu einem brauchbaren Eigenschaftsprofil eines Schmiermittels. Allerdings besteht ein dauerhaftes Bedürfnis dieses Eigenschaftsprofil zu verbessern.

In Anbetracht des Standes der Technik ist es nun Aufgabe der vorliegenden Erfindung ein Additiv und ein Schmiermittel mit einem verbesserten Eigenschaftsprofil zur Verfügung zu stellen.

Verbesserungswürdig ist insbesondere der Reibwert der Schmiermittel. Hierbei sollte das Additiv eine erhöhte Kompatibilität zu konventionellen Additiven, insbesondere PIB-Succinimiden aufweisen, so dass der Reibwert auch bei Zusatz dieser Additive nicht übermäßig beeinträchtigt wird. Darüber hinaus sollte das Additiv zu einer Steigerung der Dispergierwirkung, insbesondere der Russdispergierung führen.

Ferner sollte das Schmiermittel einen gesteigerten Viskositätsindex aufweisen, ohne dass hierdurch andere Eigenschaften in inakzeptabler Weise beeinträchtigt werden.

Weiterhin sollte insbesondere eine Verringerung der Bildung von Grauflecken (*grey staining, surface fatigue, micro-pitting*) bzw. Grübchen (*sub-surface fatigue, pitting*) erzielt werden.

Eine weitere Aufgabe der Erfindung bestand darin, Additive bereitzustellen, die einfach und kostengünstig hergestellt werden können, wobei insbesondere kommerziell erhältliche Komponenten eingesetzt werden sollten. Hierbei sollte die Produktion großtechnisch erfolgen können, ohne dass hierzu neue oder konstruktiv aufwendige Anlagen benötigt werden.

Des Weiteren war es ein Ziel der vorliegenden Erfindung ein Additiv bereitzustellen, das eine Vielzahl von

wünschenswerten Eigenschaften in dem Schmiermittel bewirkt. Hierdurch kann die Anzahl an unterschiedlichen Additiven minimiert werden.

Weiterhin sollte das Additiv zu einer Verbesserung des Kraftstoffverbrauchs führen, ohne dass hierdurch die Umweltverträglichkeit des Schmiermittels beeinträchtigt wird.

Gelöst werden diese sowie weitere nicht explizit genannte Aufgaben, die jedoch aus den hierin einleitend diskutierten Zusammenhängen ohne weiteres ableitbar oder erschließbar sind, durch ein Polyalkyl(meth)acrylat zur Verbesserung von Schmieröleigenschaften mit allen Merkmalen des Patentanspruchs 1. Zweckmäßige Abwandlungen des erfindungsgemäßen Polyalkyl(meth)acrylats werden in den auf Anspruch 1 rückbezogenen Unteransprüchen unter Schutz gestellt.

Gegenstand der vorliegenden Erfindung ist dementsprechend ein Polyalkyl(meth)acrylat zur Verbesserung von Schmieröleigenschaften, umfassend Wiederholungseinheiten, die von (Meth)acrylaten mit 6 bis 22 Kohlenstoffatomen im Alkoholrest abgeleitet sind, welches dadurch gekennzeichnet ist, dass das Polyalkyl(meth)acrylat ein Pfropfcopolymer ist, wobei die Pfropfgundlage

a) 0 bis 40 Gew.-% an Wiederholungseinheiten umfasst, die von (Meth)acrylaten der Formel (I) abgeleitet sind

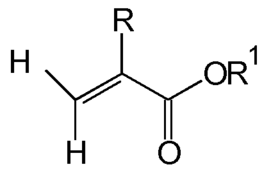

(I),

worin R Wasserstoff oder Methyl darstellt und $R^1$ einen Alkylrest mit 1 bis 5 Kohlenstoffatomen bedeutet,

b) 20 bis 99,9 Gew.-% an Wiederholungseinheiten umfasst, die von (Meth)acrylaten der Formel (II) abgeleitet sind

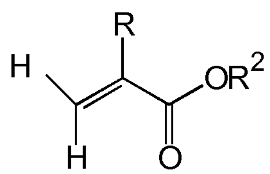

(II),

worin R Wasserstoff oder Methyl darstellt und $R^2$ einen Alkylrest mit 6 bis 22 Kohlenstoffatomen bedeutet,

c) 0 bis 20 Gew.-% an Wiederholungseinheiten umfasst, die von (Meth)acrylaten der Formel (III) abgeleitet sind

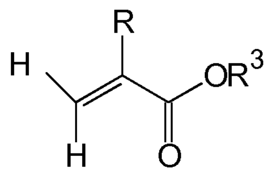

(III),

worin R Wasserstoff oder Methyl darstellt und $R^3$ einen Alkylrest mit 23 bis 4000 Kohlenstoffatomen bedeutet, und

die Pfropfauflage 0,1 bis 10 Gew.-% an Wiederholungseinheiten umfasst, die von Amin-Derivaten eines polaren ethylenisch ungesättigten Monomeren abgeleitet sind, wobei das polare ethylenisch ungesättigte Monomer, von welchem das Amin-Derivat abgeleitet ist, Maleinsäure, Maleinsäureanhydrid oder ein Maleinsäurederivat ist und das Amin-Derivat von N-Phenyl-1,4-Phenylendiamin abgeleitet ist.

Hierdurch gelingt es auf nicht vorhersehbare Weise ein Polyalkyl(meth)acrylat und ein Schmiermittel mit einem verbesserten Eigenschaftsprofil bereitzustellen.

So zeigt ein Schmiermittel mit den erfindungsgemäßen Polyalkyl(meth)acrylaten einen verbesserten Reibwert. Hierbei weist das Additiv eine erhöhte Kompatibilität zu konventionellen Additiven, insbesondere PIB-Succinimiden auf, so dass der Reibwert auch bei Zusatz dieser Additive nicht übermäßig beeinträchtigt wird. Darüber hinaus führt das Additiv zu einer Steigerung der Dispergierwirkung, insbesondere der Russdispergierung.

Ferner weist das Schmiermittel einen gesteigerten Viskositätsindex auf, ohne dass hierdurch andere Eigenschaften in inakzeptabler Weise beeinträchtigt werden. Für eine signifikante Steigerung des Viskositätsindexes genügen relativ geringe Mengen der vorliegenden Additive, die eine hohe Verdickungswirkung zeigen.

Weiterhin kann eine Verringerung der Bildung von Grauflecken (*grey staining, surface fatigue, micro-pitting*) bzw. Grübchen (*sub-surface fatigue, pitting*) erzielt werden. Man unterscheidet üblich zwei Gruppen von Defekten an metallischen Oberflächen von Getrieben, insbesondere an Verzahnungen und Wälzlagern:

1. Verschleiß (*wear*) durch kontinuierlichen oberflächlichen Materialabtrag bzw. Fressen (*scuffing*) durch plötzlichen Materialabtrag nach oberflächlichem Verschweißen beider Reibpartner.

2. Ermüdung (*fatigue*), die durch Grauflecken (*grey staining, surface fatigue, micro-pitting*) bzw. Grübchen (*sub-surface fatigue, pitting*) sichtbar wird. Diese Schäden entstehen durch Abplatzen bzw. Herausbrechen von Material aufgrund von Rissen, die 20-40μm bzw. 100-500μm unterhalb der Oberfläche durch Schubspannungen im Metallgitter hervorgerufen werden.

Die genannten Schadensarten sind für Verzahnungen und Wälzlager allgemein bekannt und beispielsweise in den Druckschriften "Gears - Wear and Damage to Gear Teeth", ISO DIN 10825 und "Wälzlagerschäden", Publ.-Nr. WL 82 102/2 DA der Fa. FAG (Schaeffler KG), Schweinfurt 2004 ausführlich beschrieben.

Darüber hinaus stellt die vorliegende Erfindung Additive bereit, die einfach und kostengünstig hergestellt werden können, wobei insbesondere kommerziell erhältliche Komponenten eingesetzt werden können. Hierbei kann die Produktion großtechnisch erfolgen, ohne dass hierzu neue oder konstruktiv aufwendige Anlagen benötigt werden.

Des Weiteren können die erfindungsgemäßen Additive eine Vielzahl von wünschenswerten Eigenschaften in dem Schmiermittel bewirken. Hierdurch kann die Anzahl an unterschiedlichen Additiven minimiert werden.

Weiterhin kann das Additiv zu einer Verbesserung des Kraftstoffverbrauchs führen, wobei hiermit keine nachteiligen Wirkungen auf die Umweltverträglichkeit verbunden sind.

Ferner zeigen die erfindungsgemäßen Polyalkyl(meth)acrylate eine ausgezeichnete Verdickungswirkung und eine hohe Scherstabilität. Weiterhin erhöhen relativ geringe Mengen der vorliegenden Polyalkyl(meth)acrylate den Viskositätsindex von unterschiedlichen Schmierölen.

Das erfindungsgemäße Polymer basiert auf (Meth)acrylaten. Polyalkyl(meth)acrylate sind Polymere, durch die Polymerisation von Alkyl(meth)acrylaten erhalten werden können. Der Ausdruck (Meth)acrylate umfasst Methacrylate und Acrylate sowie Mischungen aus beiden. Diese Monomere sind weithin bekannt.

Polyalkyl(meth)acrylate umfassen vorzugsweise mindestens 40 Gew.-%, besonders bevorzugt mindestens 60 Gew.-%, insbesondere bevorzugt mindestens 80 Gew.-% und ganz besonders mindestens 90 Gew.-% Wiederholungseinheiten, die von (Meth)acrylaten, vorzugsweise Alkyl(meth)acrylaten abgeleitet sind.

Bevorzugte Polyalkyl(meth)acrylate umfassen

a) 0 bis 40 Gew.-%, insbesondere 1 bis 25 Gew.-% und besonders bevorzugt 2 bis 15 Gew. % an Wiederholungseinheiten, die von (Meth)acrylaten der Formel (I) abgeleitet sind

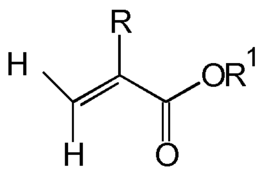

(I),

worin R Wasserstoff oder Methyl darstellt und $R^1$ einen Alkylrest mit 1 bis 5 Kohlenstoffatomen bedeutet,

b) 50 bis 99,9 Gew. %, insbesondere mindestens 70 Gew.-% und besonders bevorzugt mindestens 80 Gew.-% an Wiederholungseinheiten, die von (Meth)acrylaten der Formel (II) abgeleitet sind

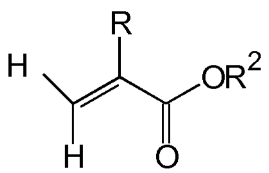

(II),

worin R Wasserstoff oder Methyl darstellt und $R^2$ einen Alkylrest mit 6 bis 22 Kohlenstoffatomen bedeutet,

c) 0,5 bis 20 Gew. % und besonders bevorzugt 1 bis 10 Gew.-% an Wiederholungseinheiten, die von (Meth)acrylaten der Formel (III) abgeleitet sind

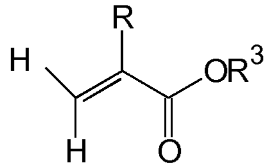

(III),

worin R Wasserstoff oder Methyl darstellt und $R^3$ einen Alkylrest mit 23 bis 4000, vorzugsweise 23 bis 400 Kohlenstoffatomen bedeutet, und

d) 0,1 bis 10 Gew.-%, vorzugsweise 1 bis 8 Gew. % und besonders bevorzugt 2 bis 5 Gew.-% an Wiederholungseinheiten, die von Amin-Derivaten eines polaren ethylenisch ungesättigten Monomeren abgeleitet sind, wobei das polare ethylenisch ungesättigte Monomer, von welchem das Amin-Derivat abgeleitet ist, Maleinsäure, Maleinsäureanhydrid oder ein Maleinsäurederivat ist und das Amin-Derivat von N-Phenyl-1,4-Phenylendiamin abgeleitet ist.

Die Polyalkyl(meth)acrylate können bevorzugt durch radikalische Polymerisation erhalten werden. Dementsprechend ergibt sich der Gewichtsanteil an den jeweiligen Wiederholungseinheiten, die diese Polymere aufweisen, aus den zur Herstellung der Polymere eingesetzten Gewichtsanteilen an entsprechenden Monomeren.

Beispiele für (Meth)acrylate der Formel (I) sind unter anderem lineare und verzweigte (Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert.-Butyl(meth)acrylat und Pentyl(meth)acrylat; und Cycloalkyl(meth)acrylate, wie Cyclopentyl(meth)acrylat.

Zu den (Meth)acrylaten der Formel (II) gehören insbesondere, lineare und verzweigte (Meth)acrylate. die sich von gesättigten Alkoholen ableiten, wie Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, 2-Methylpentadecyl(meth)acrylat, 2-Ethyltetradecyl(meth)acrylat, 2-Propyltridecyl(meth)acrylat, 2-Butyldodecyl(meth)acrylat, 2-Methylhexadecyl(meth)acrylat, 2-Pentyldodecyl(meth)acrylat, 2-Hexyldecyl-(meth)acrylat, 2-Hexylundecyl(meth)acrylat, n-Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Docosyl(meth)acrylat; (Meth)acrylate, die sich von ungesättigten Alkoholen ableiten, wie z. B. Oleyl(meth)acrylat; Cycloalkyl(meth)acrylate, wie Cyclohexyl(meth)acrylat, 3-Vinylcyclohexyl(meth)acrylat, Bornyl(meth)acrylat, 2,4,5-Tri-t-butyl-3-vinylcyclohexyl(meth)acrylat, 2,3,4,5-Tetra-t-butylcyclohexyl(meth)acrylat;

Beispiele für Monomere der Formel (III) sind unter anderem lineare und verzweigte (Meth)acrylate, die sich von gesättigten Alkoholen ableiten, wie Cetyleicosyl(meth)acrylat, Stearyleicosyl(meth)acrylat und/oder Eicosyltetratriacontyl(meth)acrylat; Cycloalkyl(meth)acrylate, wie 2,3,4,5-Tetra-t-hexylcyclohexyl(meth)acrylat.

Gemäß einer besonderen Ausgestaltung der vorliegenden Erfindung zählen zu den Monomeren der Formel (III) so genannte auf Polyolefin-basierte Makromonomere mit (Meth)acrylat-Gruppen, die unter anderem in DE 10 2007 032 120 A1, eingereicht am 09.07.2007 beim Deutschen Patentamt mit der Anmeldenummer DE102007032120.3; und DE 10 2007 046 223 A1, eingereicht am 26.09.2007 beim Deutschen Patentamt mit der Anmeldenummer DE 102007046223.0; beschrieben sind, wobei die Offenbarungen dieser Druckschriften, insbesondere die darin beschriebenen (Meth)acrylate mit mindestens 23 Kohlenstoffatome im Rest zu Zwecken der Offenbarung in die vorliegende Anmeldung durch Referenz hierauf eingefügt werden.

Polyolefin-basierte Makromonomere sind in der Fachwelt bekannt. Diese Wiederholungseinheiten umfassen mindestens eine Gruppe, die von Polyolefinen abgeleitet ist. Polyolefine sind in der Fachwelt bekannt, wobei diese durch Polymerisation von Alkenen und/oder Alkadienen, die aus den Elementen Kohlenstoff und Wasserstoff bestehen, beispielsweise $C_2$-$C_{1C}$-Alkene wie Ethylen, Propylen, n-Buten, Isobuten, Norbornen und/oder $C_4$-$C_{1C}$-Alkadiene wie Butadien, Isopren, Norbornadien, erhalten werden können. Die von Polyolefin-basierten Makromonomeren abgeleiteten Wiederholungseinheiten umfassen vorzugsweise mindestens 70 Gew.-% und besonders bevorzugt mindestens 80 Gew.-% und ganz besonders bevorzugt mindestens 90 Gew.-% an Gruppen die von Alkenen und/oder Alkadienen abgeleitet sind, bezogen auf das Gewicht der von Polyolefin-basierten Makromonomeren abgeleiteten Wiederholungseinheiten. Hierbei können die polyolefinischen Gruppen insbesondere auch hydriert vorliegen. Neben den Gruppen, die von Alkenen und/oder Alkadienen abgeleitet sind, können die von Polyolefin-basierten Makromonomeren abgeleiteten

Wiederholungseinheiten weitere Gruppen umfassen. Hierzu gehören geringe Anteile an copolymerisierbaren Monomeren. Diese Monomeren sind an sich bekannt und umfassen unter anderem Alkyl(meth)acrylate, Styrolmonomere, Fumarate, Maleate, Vinylester und/oder Vinylether. Der Anteil dieser auf copolymerisierbaren Monomeren basierten Gruppen beträgt vorzugsweise höchstens 30 Gew.-%, besonders bevorzugt höchstens 15 Gew.-%, bezogen auf das Gewicht der von Polyolefin-basierten Makromonomeren abgeleiteten Wiederholungseinheiten. Des Weiteren können die von Polyolefin-basierten Makromonomeren abgeleiteten Wiederholungseinheiten Anfangsgruppen und/oder Endgruppen umfassen, die zur Funktionalisierung dienen oder durch die Herstellung der von Polyolefin-basierten Makromonomeren abgeleiteten Wiederholungseinheiten bedingt sind. Der Anteil dieser Anfangsgruppen und/oder Endgruppen beträgt vorzugsweise höchstens 30 Gew.-%, besonders bevorzugt höchstens 15 Gew.-%, bezogen auf das Gewicht der von Polyolefin basierten Makromonomeren abgeleiteten Wiederholungseinheiten.

Vorzugsweise liegt das Zahlenmittel des Molekulargewichtes der Wiederholungseinheiten, die von Polyolefin-basierten Makromonomeren abgeleitet sind, im Bereich von 500 bis 50000 g/mol, besonders bevorzugt 700 bis 10000 g/mol, insbesondere 1500 bis 4900 g/mol und ganz besonders bevorzugt 2000 bis 3000 g/mol.

Diese Werte ergeben sich im Falle der Herstellung der Kammpolymere durch Copolymerisation von niedermolekularen und makromolekularen Monomeren über die Eigenschaften der makromolekularen Monomeren. Im Falle der polymeranalogen Umsetzungen ergibt sich diese Eigenschaft beispielsweise aus den eingesetzten Makroalkoholen und/oder Makroaminen unter Berücksichtigung der umgesetzten Wiederholungseinheiten der Hauptkette. Im Falle der Pfropfcopolymerisationen kann über den Anteil an gebildeten Polyolefinen, der nicht in die Hauptkette eingebaut wurde, auf die Molekulargewichtsverteilung des Polyolefins geschlossen werden.

Die Wiederholungseinheiten, die von Polyolefin-basierten Makromonomeren abgeleitet sind, weisen vorzugsweise eine niedrige Schmelztemperatur auf, wobei diese über DSC gemessen wird. Bevorzugt ist die Schmelztemperatur der von den Polyolefin-basierten Makromonomeren abgeleiteten Wiederholungseinheiten kleiner oder gleich -10°C, insbesondere bevorzugt kleiner oder gleich -20°C, besonders bevorzugt kleiner oder gleich -40°C. Ganz besonders bevorzugt kann keine Schmelztemperatur gemäß DSC bei den Wiederholungseinheiten, die von den Polyolefin-basierten Makromonomeren abgeleitet sind, gemessen werden.

Darüber hinaus gehören zu den Monomeren gemäß Formel (III) insbesondere langkettige verzweigte (Meth)acrylate, die unter anderem in US 6,746,993, eingereicht am 07.08.2002 beim Amerikanischen Patentamt (USPTO) mit der Anmeldenummer 10/212,784; und US 2004/077509, eingereicht am 01.08.2003 beim Amerikanischen Patentamt (USPTO) mit der Anmeldenummer 10/632,108; beschrieben sind, wobei die Offenbarungen dieser Druckschriften, insbesondere die darin beschriebenen (Meth)acrylate mit mindestens 23 Kohlenstoffatome im Rest zu Zwecken der Offenbarung in die vorliegende Anmeldung durch Referenz hierauf eingefügt werden.

Alkyl(meth)acrylate mit langkettigem Alkoholrest, insbesondere die Komponenten (II) und (III), lassen sich beispielsweise durch Umsetzen von (Meth)acrylaten und/oder den entsprechenden Säuren mit langkettigen Fettalkoholen erhalten, wobei im Allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911, Oxo Alcohol® 7900, Oxo Alcohol® 1100; Alfol® 610, Alfol® 810, Lial® 125 und Nafol®-Typen (Sasol); C13-C15-Alkohol (BASF); Epal® 610 und Epal® 810 (Afton) ; Linevol® 79, Linevol® 911 und Neodol® 25 (Shell); Dehydad®, Hydrenol®- und Lorol®-Typen (Cognis); Acropol® 35 und Exxal® 10 (Exxon Chemicals); Kalcol® 2465 (Kao Chemicals).

Das Polyalkyl(meth)acrylat umfasst Wiederholungseinheiten, die von Amin-Derivaten eines polaren ethylenisch ungesättigten Monomeren abgeleitet sind. Der Ausdruck "polares ethylenisch ungesättigtes Monomer" verdeutlicht, dass das Monomer radikalisch polymerisiert werden kann. Weiterhin drückt der Begriff polar aus, dass das Monomer auch nach der Umsetzung mit einem Amin z.B. zu einem Amin höherer Ordnung (von primär zu sekundär oder von sekundär zu tertiär), einem Amid oder einem Imid in Umgebung der Reaktionsstelle besonders polar ist. Zu den Gruppen die hierzu gehören zählen insbesondere entstehende Imid-Gruppen oder Carbonsäure-Gruppen, die beispielsweise bei der Reaktion von Säureanhydriden mit Aminen gebildet werden, oder Hydroxygruppen, die bei der Umsetzung von Epoxiden erhalten werden. Carbonsäure-Gruppen können hierbei in Form der freien Säure oder als Salz vorliegen.

Demgemäß befinden sich in Umgebung der Amid-Gruppe des Amin-Derivats (bei Umsetzung mit einem Anhydrid) bzw. der Amin-Gruppe des Amin-Derivats (bei Umsetzung mit einem Epoxid) weitere polare Gruppen, beispielsweise Carbonylgruppen, Säuregruppen oder Hydroxygruppen. Vorzugsweise stellt dementsprechend die Amid-Gruppe des Amin-Derivats eine Imidgruppen dar. Der Begriff "Umgebung der Reaktionsstelle" deutet an, dass die polaren Gruppen, die entstehen über höchstens 6, vorzugsweise über höchstens 5 kovalente Bindungen von der erhaltenen Amin- oder Amid-Gruppe entfernt sind, bezogen auf die Entfernung zwischen Sauerstoffatom und Stickstoffatom.

Gemäß der vorliegenden Erfindung kann das polare ethylenisch ungesättigte Monomer, von welchem das Amin-Derivat abgeleitet ist, Maleinsäure, Maleinsäureanhydrid oder ein Maleinsäurederivat sein, wie beispielsweise Maleinsäuremonoester oder Maleinsäurediester, wobei Maleinsäureanhydrid besonders bevorzugt ist.

Der von dem Amin gebildete Rest des Amin-Derivats eines polaren ethylenisch ungesättigten Monomeren ist von dem primären Amin N-Phenyl-1,4-Phenylendiamin (DPA) abgeleitet.

Gemäß der vorliegenden Erfindung werden die Wiederholungseinheiten, die von Amin-Derivaten eines polaren

ethylenisch ungesättigten Monomeren abgeleitet sind, im erfindungsgemäßen Polyalkyl(meth)acrylat dadurch erzeugt, dass zunächst ein Polymer mit reaktiven, polaren Wiederholungseinheiten hergestellt wird, die vorzugsweise von Maleinsäureanhydrid abgeleitet sind. Anschließend werden diese reaktiven Gruppen mit dem zuvor dargelegten Amin zu den Polyalkyl(meth)acrylaten der vorliegenden Erfindung umgesetzt.

Weiterhin kann die Monomermischung zur Herstellung der erfindungsgemäß einzusetzenden Polyalkyl(meth)acrylate Monomere umfassen, die sich mit den zuvor dargelegten Monomeren copolymerisieren lassen. Hierzu gehören unter anderem

Aryl(meth)acrylate, wie Benzylmethacrylat oder Phenylmethacrylat, wobei die Arylreste jeweils unsubstituiert oder bis zu vierfach substituiert sein können;

Styrolmonomere, wie zum Beispiel Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;

Itaconsäure und Itaconsäurederivate, wie beispielsweise Itaconsäuremonoester, Itaconsäurediester und Itaconsäureanhydrid;

Fumarsäure und Fumarsäurederivate wie beispielsweise Fumarsäuremonoester, Fumarsäurediester und Fumarsäureanhydrid;

Vinyl- und Isoprenylether, beispielsweise Alkylvinylether, insbesondere Methylvinylether, Ethylvinylether und Dodecylvinylether;

Vinylester, beispielsweise Vinylacetat;

1-Alkene, insbesondere 1-Buten, 1-Penten-, 1-Hexen, 1-Hepten, 1-Octen, 1-Nonen, 1-Decen, 1-Undecen, 1-Dodecen, 1-Tridecen, 1-Tetradecen und 1-Pentadecen.

Gemäß einer besonderen Ausführungsform können insbesondere dispergierende Monomere eingesetzt werden.

Dispergierende Monomere werden seit langem zur Funktionalisierung von polymeren Additiven in Schmierölen eingesetzt und sind dem Fachmann daher bekannt (vgl. R.M. Mortier, S.T. Orszulik (eds.): "Chemistry and Technology of Lubricants", Blackie Academic & Professional, London, 2nd ed. 1997). Zweckmäßig können insbesondere heterocyclische Vinylverbindungen und/oder ethylenisch ungesättigte, polare Ester- oder Amid-Verbindungen der Formel (IV)

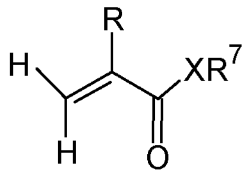

(IV),

worin R Wasserstoff oder Methyl darstellt, X Sauerstoff, Schwefel oder eine Aminogruppe der Formel -NH- oder -$NR^a$-, worin $R^a$ für einen Alkylrest mit 1 bis 10, bevorzugt 1 bis 4 Kohlenstoffatomen steht, $R^7$ einen 2 bis 50, insbesondere 2 bis 30, vorzugsweise 2 bis 20 Kohlenstoffatome umfassenden Rest mit mindestens einem, vorzugsweise mindestens zwei Heteroatomen, darstellt, als dispergierende Monomere eingesetzt werden.

Beispiele für dispergierende Monomere der Formel (IV) sind unter anderem Aminoalkyl(meth)acrylate, Aminoalkyl(meth)acrylamide, Hydroxylalkyl(meth)acrylate, heterocyclische (Meth)acrylate und/oder carbonylhaltige (Meth)acrylate.

Zu den Hydroxyalkyl(meth)acrylate zählen unter anderem 2-Hydroxypropyl(meth)acrylat, 3,4-Dihydroxybutyl(meth)acrylat, 2-Hydroxyethyl(meth)acrylat, 3-Hydroxypropyl(meth)acrylat, 2,5-Dimethyl-1,6-hexandiol(meth)acrylat und 1,10-Decandiol(meth)acrylat.

Carbonylhaltige (Meth)acrylate umfassen beispielsweise 2-Carboxyethyl(meth)acrylat, Carboxymethyl(meth)acrylat, N-(Methacryloyloxy)formamid, Acetonyl(meth)acrylat, Bernsteinsäure-mono-2-(meth)acryloyloxyethylester, N-(Meth)acryloylmorpholin, N-(Meth)acryloyl-2-pyrrolidinon, N-(2-(Meth)acryloyloxyethyl)-2-pyrrolidinon, N-(3-(Meth)acryloyloxypropyl)-2-pyrrolidinon, N-(2-(Meth)acryloyloxypentadecyl)-2-pyrrolidinon, N-(3-(Meth)acryloyloxyheptadecyl)-2-pyrrolidinon und N-(2-(Meth)acryloyloxyethyl)ethylenharnstoff. 2-Acetoacetoxyethyl(meth)acrylat

Zu den heterocyclischen (Meth)acrylaten zählen unter anderem 2-(1-Imidazolyl)ethyl(meth)acrylat, Oxazolidinylethyl(meth)acrylat, 2-(4-Morpholinyl)ethyl(meth)acrylat 1-(2-Methacryloyloxyethyl)-2-pyrrolidon, N-Methacryloylmorpholin, N-Methacryloyl-2-pyrrolidinon, N-(2-Methacryloyloxyethyl)-2-pyrrolidinon, N-(3-Methacryloyloxypropyl)-2-pyrrolidinon.

Zu den Aminoalkyl(meth)acrylaten zählen insbesondere N,N-Dimethylaminoethyl(meth)acrylat, N,N-Dimethylaminopropyl(meth)acrylat, N,N-Diethylaminopentyl(meth)acrylat, N,N-Dibutylaminohexadecyl(meth)acrylat.

Weiterhin können Aminoalkyl(meth)acrylamide als dispergierende Monomere eingesetzt werden, wie N,N-Dimethylaminopropyl(meth)acrylamid.

Darüber hinaus können Phosphor-, Bor- und/oder Siliciumhaltige (Meth)acrylate als dispergierende Monomere eingesetzt werden, wie 2-(Dimethylphosphato)propyl(meth)acrylat, 2-(Ethylenphosphito)propyl(meth)acrylat, Dimethylphosphinomethyl(meth)acrylat, Dimethylphosphonoethyl(meth)acrylat, Diethyl(meth)acryloylphosphonat, Dipropyl(meth)acryloylphosphat, 2-(Dibutylphosphono)ethyl(meth)acrylat, 2,3-Butylen(meth)acryloylethylborat, Methyldiethoxy(meth)acryloylethoxysilan, Diethylphosphatoethyl(meth)acrylat.

Zu den bevorzugten heterocyclischen Vinylverbindungen zählen unter anderem 2-Vinylpyridin, 3-Vinylpyridin, 4-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, N-Vinylimidazol, 2-Methyl-1-vinylimidazol, N-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole.

Zu den besonders bevorzugten dispergierenden Monomeren gehören insbesondere ethylenisch ungesättigte Verbindungen, die mindestens ein Stickstoffatom umfassen, wobei diese besonders bevorzugt aus den zuvor dargelegten heterocyclischen Vinylverbindungen und/oder Aminoalkyl(meth)acrylaten, Aminoalkyl(meth)acrylamiden und/oder heterocyclischen (Meth)acrylaten ausgewählt sind.

Gemäß einer besonderen Ausführungsform werden insbesondere Styrolmonomere, heterocyclische Monomere, Vinylether und/oder Vinylester eingesetzt, wobei insbesondere Styrolmonomere bevorzugt sind.

Der Anteil an Comonomeren kann je nach Einsatzzweck und Eigenschaftsprofil des Polymers variiert werden. Im Allgemeinen kann dieser Anteil im Bereich von 0 bis 30 Gew.-%, vorzugsweise 0,01 bis 20 Gew.-% und besonders bevorzugt 0,1 bis 10 Gew.-% liegen. Insbesondere der Anteil an Styrolmonomeren, heterocyclischen Monomeren, Vinylether und/oder Vinylester kann besonders bevorzugt im Bereich von 0,1 bis 20 Gew.-%, besonders bevorzugt im Bereich von 1 bis 10 Gew.-% liegen.

Die zuvor genannten ethylenisch ungesättigten Monomere können einzeln oder als Mischungen eingesetzt werden. Es ist des Weiteren möglich, die Monomerzusammensetzung während der Polymerisation der Hauptkette zu variieren, um definierte Strukturen, Pfropfpolymere, zu erhalten.

Mit Vorteil kann das Gewichtsverhältnis von Pfropfauflage zu Pfropfgrundlage im Bereich von 1 zu 2000 bis 1 zu 5, besonders bevorzugt 1:1000 bis 1 zu 10 und besonders bevorzugt 1 zu 100 bis 1 zu 20 liegen.

Gemäß einer bevorzugten Abwandlung kann die Pfropfauflage sehr kurzkettig sein, wobei diese Eigenschaft durch Vergleichsversuche bestimmt werden kann, bei denen die Pfropfpolymerisation ohne Pfropfgrundlage durchgeführt wird. Gemäß einer besonderen Ausführungsform kann der zahlengemittelte Polymerisationsgrad der Pfropfauflage höchstens 10, besonders bevorzugt höchstens 5 und besonders bevorzugt höchstens 3 Wiederholungseinheiten betragen.

Überraschende Vorteile zeigen insbesondere Polyalkyl(meth)acrylate, die vorzugsweise eine spezifische Viskosität im Bereich von 5 bis 35 mL/g, besonders bevorzugt im Bereich 5,5 bis 25 bei 100°C aufweisen.

Die spezifische Viskosität wird in einem API Gruppe III Grundöl, welches vorzugsweise eine kinematische Viskosität (gemäß ASTM D-445) bei 100°C ($KV_{100}$) von etwa 5,9 $mm^2/s$, vorzugsweise 5,7 $mm^2/s$ bis 6,3 $mm^2/s$, einen Viskositätsindex (gemäß ASTM D-2270) von mindestens 120, einen Pour Point (gemäß ASTM D-97) von höchstens -12°C und eine Dichte (gemäß ASTM D-4052) bei 15°C von etwa 841 (beispielsweise kommerziell erhältlich von der Firma Neste unter der Bezeichnung NEXBASE 3060) aufweist, als Lösemittel bei 100°C mit Hilfe einer Ubbelohde-Kapillare bestimmt. Die Größe der Ubbelhode-Kapillare wird so gewählt, dass die Durchlaufzeiten des reinen Lösemittels und der Polymerhaltigen Lösungen zwischen 200 und 300 Sekunden beträgt. Die Massenkonzentration $\beta$ in g/mL wird so gewählt, dass die Durchlaufzeit der polymerhaltigen Lösung die des reinen Lösemittels um nicht mehr als 10% übersteigt. Aus den Durchlaufzeiten der polymerhaltigen Lösung und des Lösemittels sowie aus der Massenkonzentration des Polymeren in der Lösung lässt sich die spezifische Viskosität wie folgt berechnen:

$$\text{Spezifische Viskosität}\ \eta_{sp/\beta} = \frac{\frac{\eta - \eta_L}{\eta_L}}{\beta}$$

mit

- $\eta$ = Viskosität der Lösung
- $\eta_L$ = Viskosität des Lösungmittels
- $\beta$ = Massenkonzentration

Von besonderem Interesse sind unter anderem Polyalkyl(meth)acrylate, die vorzugsweise ein gewichtsgemitteltes Molekulargewicht $M_w$ im Bereich von 5000 bis 10000000 g/mol, bevorzugt 10000 bis 1000000 g/mol, besonders

bevorzugt 10000 bis 750000 g/mol und ganz besonders bevorzugt 20000bis 500000 g/mol aufweisen.

Das zahlengemittelte Molekulargewicht $M_n$ kann vorzugsweise im Bereich von 1000 bis 500000 g/mol, besonders bevorzugt 2500 bis 500000 g/mol und ganz besonders bevorzugt 5000 bis 250000 g/mol liegen.

Zweckmäßig sind darüber hinaus Polyalkyl(meth)acrylate, deren Polydispersitätsindex $M_w/M_n$ im Bereich von 1,1 bis 5,0 besonders bevorzugt im Bereich von 1,4 bis 4,5 und ganz besonders bevorzugt im Bereich von 1,6 bis 3,0 liegt. Das zahlengemittelte und das gewichtsgemittelte Molekulargewicht können durch bekannte Verfahren, beispielsweise die Gelpermeationschromatographie (GPC), vorzugsweise unter Verwendung eines PMMA-Standards, bestimmt werden. Vorzugsweise kann das Molekulargewicht des Polymers vor der Derivatisierung desselben mit einem Amin durchgeführt werden.

Die Herstellung der Polyalkyl(meth)acrylate aus den zuvor beschriebenen Zusammensetzungen ist an sich bekannt. So können diese Polymere insbesondere durch radikalische Polymerisation, sowie verwandte Verfahren, wie beispielsweise ATRP (=Atom Transfer Radical Polymerisation) oder RAFT (=Reversible Addition Fragmentation Chain Transfer) erhalten werden.

Das ATRP-Verfahren ist an sich bekannt. Diese Reaktionsführung wird beispielsweise von J-S. Wang, et al., J.Am.Chem.Soc., vol.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/40415 und WO 99/10387 Varianten der zuvor erläuterten ATRP.

Des Weiteren können die erfindungsgemäßen Polymere beispielsweise auch über RAFT-Methoden erhalten werden. Dieses Verfahren ist beispielsweise in WO 98/01478 und WO 2004/083169 ausführlich dargestellt, worauf für Zwecke der Offenbarung ausdrücklich Bezug genommen wird.

Weiterhin sind die erfindungsgemäßen Polymere durch NMP-Verfahren (nitroxide mediated polymerization) erhältlich, die unter anderem in US 4581429 beschrieben sind.

Umfassend, insbesondere mit weiteren Referenzen sind diese Methoden unter anderem in K. Matyjaszewski, T. P. Davis, Handbook of Radical Polymerization, Wiley Interscience, Hoboken 2002 dargestellt, worauf für Zwecke der Offenbarung ausdrücklich Bezug genommen wird.

Die radikalische Polymerisation der ethylenischungesättigten Verbindungen kann auf an sich bekannte Weise erfolgen. Die übliche freie radikalische Polymerisation ist u.a. in Ullmanns's Encyclopedia of Industrial Chemistry, Sixth Edition dargelegt.

Im Rahmen der vorliegenden Erfindung wird die Polymerisation unter Verwendung mindestens einen Polymerisationsinitiators für die radikalische Polymerisation gestartet. Hierzu gehören unter anderem die in der Fachwelt weithin bekannten Azoinitiatoren, wie 2,2'-Azobisisobutyronitril, 2,2'-Azobis-(2,4-dimethylvaleronitril) und 1,1-Azobiscyclohexancarbonitril, organische Peroxide, wie Dicumylperoxid, Diacylperoxide, wie Dilauroylperoxid, Peroxydicarbonate, wie Diisopropylperoxydicarbonat, Perester, wie tert. Butylperoxy-2-ethylhexanoat, und dergleichen.

Für die Zwecke der vorliegenden Erfindung ganz besonders geeignete Polymerisationsinitiatoren umfassen insbesondere die folgenden Verbindungen: Methylethylketonperoxid, Acetylacetonperoxid, Dilauroylperoxid, tert.-Butylper-2-ethylhexanoat, Ketonperoxid, tert-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis-(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis-(tert.-butylperoxy)-cyclohexan, 1,1-Bis-(tert.-butylperoxy)-3,3,5-trimethylcyclohexan, Cumylhydroperoxid, tert.-Butylhydroperoxid, Bis-(4-tert.-butylcyclohexyl)-peroxydicarbonat, 2,2'-Azobisisobutyronitril, 2,2'-Azobis-(2,4-dimethylvaleronitril), 1,1-Azobiscyclohexancarbonitril, Diisopropylperoxydicarbonat, tert. Amylperoxypivalat, Di-(2,4-dichlorbenzoyl)-peroxid, tert. Butylperoxypivalat, 2,2'-Azobis-(2-amidinopropane)-dihydrochlorid, Di-(3,5,5-trimethyl-hexanoyl)-peroxid, Dioctanoylperoxid, Didecanoylperoxid, 2,2'-Azobis-(N,N'-dimethylenisobutyramidin) Di-(2-methylbenzoyl)-peroxid, Dimethyl-2,2'-azobisisobutyrat, 2,2'Azobis-(2-methylbutyronitril), 2,5-Dimethyl-2,5-di-(2-ethylhexanoylperoxy)-hexan, 4,4'-Azobis-(cyanopentansäure) Di-(4-methylbenzoyl)-peroxid, Dibenzoylperoxid, tert. Amylperoxy-2-ethylhexanoat, tert. Butylperoxy-2-ethylhexanoat, tert. Butylperoxy-isobutyrat sowie Mischungen der zuvor genannten Polymerisationsinitiatoren.

Erfindungsgemäß werden Polymerisationsinitiatoren mit einer Halbwertszeit von 1 Stunde bei einer Temperatur im Bereich von 25°C bis 200°C, vorzugsweise im Bereich von 50°C bis 150°C, insbesondere im Bereich von 50°C bis 100°C, ganz besonders bevorzugt. Weiterhin sind peroxidische Polymerisationsinitiatoren, insbesondere tert-Butylperoctoat, für die vorliegenden Zwecke ganz besonders geeignet.

Das Verfahren kann entweder in An- oder Abwesenheit eines Kettenüberträgers durchgeführt werden. Als Kettenüberträger, auch Molekulargewichtsregler genannt können typische, für radikalische Polymerisationen beschriebene Spezies eingesetzt werden, wie sie dem Fachmann bekannt sind.

Zu den schwefelfreien Molekulargewichtsreglern gehören beispielsweise, ohne dass hierdurch eine Einschränkung erfolgen soll, dimeres $\alpha$-Methylstyrol (2,4 Diphenyl-4-methyl-1-penten), Enolether aliphatischer und/oder cycloaliphatischer Aldehyde, Terpene, $\beta$-Terpinen, Terpinolen, 1,4-Cyclohexadien, 1,4-Dihydronaphthalin, 1,4,5,8-Tetrahydronaphthalin, 2,5-Dihydrofuran, 2,5-Dimethylfuran und/oder 3,6-Dihydro-2H-pyran, bevorzugt ist dimeres $\alpha$-Methylstyrol.

Als schwefelhaltige Molekulargewichtsregler können vorzugsweise Mercaptoverbindungen, Dialkylsulfide, Dialkyldisulfide und/oder Diarylsulfide eingesetzt werden. Folgende Polymerisationsregler werden beispielhaft genannt: Di-n-butylsulfid, Di-n-octylsulfid, Diphenylsulfid, Thiodiglykol, Ethylthioethanol, Diisopropyldisulfid, Di-n-butyl-disulfid, Di-n-hexyldisulfid, Diacetyldisulfid, Diethanolsulfid, Di-t-butyltrisulfid und Dimethylsulfoxid. Bevorzugt als Molekulargewichtsreglern eingesetzte Verbindungen sind Mercaptoverbindungen, Dialkylsulfide, Dialkyldisulfide und/oder Diarylsulfide. Beispiele für diese Verbindungen sind Ethylthioglykolat, 2-Ethylhexylthioglycolat, Pentaerythrittetrathioglycolat, Cystein, 2-Mercaptoethanol, 1, 3-Mercaptopropanol, 3-Mercaptopropan-1,2-diol, 1,4-Mercaptobutanol, Mercaptoessigsäure, 3-Mercaptopropionsäure, Thioglykolsäure, Mercaptobernsteinsäure, Thioglycerin, Thioessigsäure, Thioharnstoff und Alkylmercaptane wie n-Butylmercaptan, n-Hexylmercaptan, t-Dodecylmercaptan oder n-Dodecylmercaptan. Besonders bevorzugt eingesetzte Polymerisationsregler sind Mercaptoalkohole und Mercaptocarbonsäuren. Im Rahmen der vorliegenden Erfindung wird die Verwendung von n-Dodecylmercaptan sowie tert-Dodecylmercaptan als Kettenüberträger ganz besonders bevorzugt.

Vorzugsweise werden die Wiederholungseinheiten, die von Amin-Derivaten eines polaren ethylenisch ungesättigten Monomeren abgeleitet sind, im Polyalkyl(meth)acrylat durch eine polymeranaloge Umsetzung nach der zuvor dargelegten Herstellung eines Polyalkyl(meth)acrylats erzeugt. Dementsprechend kann bevorzugt zunächst ein Polymer mit reaktiven polaren Einheiten hergestellt werden, wobei die reaktiven Einheiten mit einem Amin der zuvor dargelegten Art umgesetzt werden. Zu den reaktiven polaren Einheiten zählen insbesondere Anhydrid-Einheiten.

Die Umsetzung der im Polymeren enthaltenen reaktiven polaren Einheiten, vorzugsweise der Anhydrid-Gruppen, mit Aminen kann üblicherweise zwischen 40°C und 180°C, bevorzugt zwischen 80°C und 180°C und besonders bevorzugt zwischen 100°C und 160°C erfolgen. Das Amin kann vorzugsweise in äquimolarer Menge zu den reaktiven polaren Gruppen, vorzugsweise den Anhydrid-Gruppen, zugesetzt werden. Falls überschüssige Mengen an Amin zugegeben werden, kann dieses nachfolgend aus der Mischung abgetrennt werden. Bei zu geringen Anteilen verbleiben reaktive Gruppen zurück, die gegebenenfalls durch Zugabe von geringen Mengen Wasser in weniger reaktive Gruppen überführt werden können.

Das Amin kann in reiner Form zugegeben oder in einem geeigneten Lösemittel der Reaktionsmischung beigefügt werden. Bevorzugt sind polare Lösungsmittel, insbesondere Ester, z.B. Butylacetat oder Diisononyladipat (Plastomoll DNA).

Je nach Art der umgesetzten reaktiven Eduktgruppe kann Wasser entstehen. So wird beispielsweise bei Verwendung von Anhydrid-Gruppen Wasser freigesetzt, welches gemäß einem besonderen Aspekt der vorliegenden Erfindung möglichst vollständig aus der Reaktionsmischung entfernt werden kann, wobei Wasser beispielsweise durch trockenen Stickstoff ausgetrieben werden kann. Ferner können Trocknungsmittel eingesetzt werden. Leicht flüchtige Lösemittel wie Butylacetat, sofern solche verwendet werden, können nach der Umsetzung vorzugsweise im Vakuum abdestilliert werden.

Die erfindungsgemäßen Polymere werden vorzugsweise zur Verbesserung von Schmieröleigenschaften eingesetzt. Zu den Schmierölen gehören insbesondere Mineralöle, synthetische Öle und natürliche Öle.

Mineralöle sind an sich bekannt und kommerziell erhältlich. Sie werden im Allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im Allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluss von Braunkohle sowie Hydrieren von Stein- oder Braunkohle ist ebenfalls möglich. Dementsprechend weisen Mineralöle, je nach Herkunft unterschiedliche Anteile an aromatischen, cyclischen, verzweigten und linearen Kohlenwasserstoffen auf.

Im Allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigte Paraffine, und Verbindungen mit Heteroatomen, insbesondere O, N und/oder S auf, denen bedingt polare Eigenschaften zugesprochen werden. Die Zuordnung ist jedoch schwierig, da einzelne Alkanmoleküle sowohl langkettig verzweigte Gruppen als auch Cycloalkanreste und aromatische Anteile aufweisen können. Für die Zwecke der vorliegenden Erfindung kann die Zuordnung beispielsweise gemäß DIN 51 378 erfolgen. Polare Anteile können auch gemäß ASTM D 2007 bestimmt werden.

Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im Allgemeinen jeweils im Bereich von 0 bis 40 Gew.-%. Gemäß einem interessanten Aspekt umfasst Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im Allgemeinen größer oder gleich 60 Gew.-%, vorzugsweise größer oder gleich 80 Gew.-%, ohne dass hierdurch eine Beschränkung erfolgen soll. Ein bevorzugtes Mineralöl enthält 0,5 bis 30 Gew.-% aromatische Anteile, 15 bis 40 Gew.-% naphthenische Anteile, 35 bis 80 Gew.-% paraffinbasische Anteile, bis zu 3 Gew.-% n-Alkane und 0,05 bis 5 Gew.-% polare Verbindungen, jeweils bezogen auf das Gesamtgewicht des Mineralöls.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:

n-Alkane mit ca. 18 bis 31 C-Atome:

0,7 - 1,0 %,

gering verzweigte Alkane mit 18 bis 31 C-Atome:

1,0 - 8,0 %,

Aromaten mit 14 bis 32 C-Atomen:

0,4 - 10,7 %,

Iso- und Cyclo-Alkane mit 20 bis 32 C-Atomen:

60,7- 82,4 %,

polare Verbindungen:

0,1 - 0,8 %,

Verlust:

6, 9 - 19,4 %.

Ein verbesserte Klasse an Mineralölen (reduzierter Schwefelgehalt, reduzierter Stickstoffgehalt, höherer Viskositätsindex, niedrigerer Stockpunkt) ist durch Wasserstoffbehandlung der Mineralöle gegeben (*hydro isomerization, hydro cracking, hydro treatment, hydro finishing*). Hierbei werden in Wasserstoffpräsenz im Wesentlichen aromatische Anteile reduziert und naphthenische Anteile aufgebaut.

Wertvolle Hinweise hinsichtlich der Analyse von Mineralölen sowie eine Aufzählung von Mineralölen, die eine abweichende Zusammensetzung aufweisen, findet sich beispielsweise in T. Mang, W. Dresel (eds.): "Lubricants and Lubrication", Wiley-VCH, Weinheim 2001; R.M. Mortier, S.T. Orszulik (eds.): "Chemistry and Technology of Lubricants", Blackie Academic & Professional, London, 2nd ed. 1997; oder J. Bartz: "Additive für Schmierstoffe", Expert-Verlag, Renningen-Malmsheim 1994.

Synthetische Öle umfassen unter anderem organische Ester, beispielsweise Diester und Polyester, Polyalkylenglykole, Polyether, synthetische Kohlenwasserstoffe, insbesondere Polyolefine, von denen Polyalphaolefine (PAO) bevorzugt sind, Silikonöle und Perfluoralkylether. Darüber können synthetische Grundöle mit Herkunft aus *gas to liquid* (GTL), *coal to liquid* (CTL) oder *biomass to liquid* (BTL) Prozessen eingesetzt werden. Sie sind meist etwas teurer als die mineralischen Öle, haben aber Vorteile hinsichtlich ihrer Leistungsfähigkeit.

Natürliche Öle sind tierische oder pflanzliche Öle, wie beispielsweise Klauenöle oder Jojobaöle.

Basisöle für Schmierölformulierungen werden in Gruppen nach API (American Petroleum Institute) eingeteilt. Mineralöle werden unterteilt in Gruppe I (nicht Wasserstoff-behandelt) und, abhängig von Sättigungsgrad, Schwefelgehalt und Viskositätsindex, in die Gruppen II und III (beide Wasserstoff-behandelt). PAOs entsprechen der Gruppe IV. Alle anderen Basisöle werden in Gruppe V zusammengefasst.

Diese Schmieröle können auch als Mischungen eingesetzt werden und sind vielfach kommerziell erhältlich.

Die Konzentration des erfindungsgemäßen Polyalkyl(meth)acrylats in der Schmierölzusammensetzung liegt vorzugsweise im Bereich von 0,01 bis 30 Gew.-%, besonders bevorzugt im Bereich von 0,1 - 20 Gew.-% und ganz besonders bevorzugt im Bereich von 0,5 - 15 Gew.-%, bezogen auf das Gesamtgewicht der Zusammensetzung.

Neben den erfindungsgemäß einzusetzenden Estergruppenumfassenden Polymeren können die hier dargelegten Schmierölzusammensetzungen auch weitere Additive und Zusatzstoffe enthalten. Zu diesen Additiven gehören unter anderem VI-Verbesserer, Stockpunktverbesserer und DI-Additive (Dispergiermittel, Detergentien, Entschäumer, Korrosionsinhibitoren, Antioxidationsmittel, Verschleißschutz- und Extremdruckadditive, Reibwertveränderer).

Zu den zusätzlich einsetzbaren VI-Verbesserer gehören insbesondere Polyalkyl(meth)acrylate mit 1 bis 30 Kohlenstoffatomen in der Alkoholgruppe (PAMA; teilweise N/O-funktionell mit vorteilhaften Zusatzeigenschaften als

Dispergiermittel, Verschleißschutzadditiv und/oder Reibwertveränderer), die sich von den in Anspruch 1 dargelegten Copolymeren unterscheiden, sowie Poly(iso)butene (PIB), Fumarat-Olefin-Copolymere, Styrol-Maleat-Copolymere, hydrierte Styrol-Dien-Copolymere (HSD) und Olefincopolymere (OCP).

Zu den Stockpunktverbesserern gehören insbesondere Polyalkyl(meth)acrylate (PAMA) mit 1 bis 30 Kohlenstoffatomen in der Alkoholgruppe.

Zusammenstellungen von VI-Verbesserern und Stockpunktverbesserern für Schmieröle sind auch in T. Mang, W. Dresel (eds.): "Lubricants and Lubrication", Wiley-VCH, Weinheim 2001; R.M. Mortier, S.T. Orszulik (eds.): "Chemistry and Technology of Lubricants", Blackie Academic & Professional, London, 2nd ed. 1997; oder J. Bartz: "Additive für Schmierstoffe", Expert-Verlag, Renningen-Malmsheim 1994 dargelegt.

Zweckmäßige Dispergiermittel (*dispersant*) umfassen unter anderem Poly(isobutylen)-Derivate, z.B. Poly(isobutylene)-Succinimide (PIBSI); Ethylen-Propylen-Oligomere mit N/O-Funktionalitäten.

Zu den bevorzugten Detergentien (*detergent*) gehören unter anderem Metal-enthaltende Verbindungen, wie zum Beispiel Phenolate; Salicylate; Thiophosphonate, insbesondere Thiopyrophosphonate, Thiophosphonate und Phosphonate; Sulfonate und Carbonate. Als Metall können diese Verbindungen insbesondere Calcium, Magnesium und Barium enthalten. Diese Verbindungen können bevorzugt neutral oder überbasisch eingesetzt werden.

Von besonderem Interesse sind des Weiteren Entschäumer (*defoamer*), wobei diese vielfach in Silicon-haltige und Silicon-freie Entschäumer unterteilt werden. Zu den Silicon-haltigen Antischaummittel zählen unter anderem lineares Poly(dimethylsiloxan) und cyclisches Poly(dimethylsiloxan). Als Silicon-freie Entschäumer können vielfach Polyether, z.B. Poly(ethylenglycol) oder Tributylphosphat eingesetzt werden.

Gemäß einer besonderen Ausgestaltung können die erfindungsgemäßen Schmierölzusammensetzungen Korrosionsinhibitoren (*corrosion inhibitor*) umfassen. Diese werden vielfach unterteilt in Rostschutzadditive (*antirust additive*) und Metallpassivatoren/-desaktivatoren (*metal passivator/desactivator*). Als Rostschutzadditive können unter anderem Sulfonate, wie zum Beispiel Petroleumsulfonate oder (vielfach überbasische) synthetische Alkylbenzolsulfonate, z.B. Dinonylnaphthensulfonat; Carbonsäurederivate, wie zum Beispiel Lanolin (Wollfett), oxidierte Paraffine, Zinknaphthenate, akylierte Succinsäuren, 4-Nonylphenoxyessigsäure, Amide und Imide (N-Acylsarcosin, Imidazolinderivate); Amin-neutralisierte Mono- und Dialkylphosphorsäureester; Morpholin; Dicycylohexylamin oder Diethanolamin eingesetzt werden. Zu den Metallpassivatoren/-desaktivatoren zählen unter anderem Benzotriazol, Tolyltriazol, 2-Mercaptobenzothiazol, Dialkyl-2,5-dimercapto-1,3,4-thiadiazol; N,N'-Disalicylidenethylendiamin, N,N'-Disalicylidenpropylendiamin; Zinkdialkyldithiophosphate und Dialkyldithiocarbamate.

Eine weitere bevorzugte Gruppe von Additiven stellen Antioxidationsmittel (*antioxidant*) dar. Zu den Antioxidationsmittel gehören beispielsweise Phenole, wie zum Beispiel 2,6-Di-tert-butyl-phenol (2,6-DTB), butyliertes Hydroxytoluol (BHT), 2,6-Di-tert-butyl-4-methylphenol, 4,4'-Methylen-bis(2,6-di-tert-butylphenol); aromatische Amine, insbesondere alkylierte Diphenylamine, N-Phenyl-1-naphthylamin (PNA), polymeres 2,2,4-Trimethyldihydrochinon (TMQ); Verbindungen enthaltend Schwefel und Phosphor, wie zum Beispiel Metalldithiophospate, z.B. Zinkdithiophosphate (ZnDTP), "OOS-Triester" = Reaktionsprodukte von Dithiophosphorsäure mit aktivierten Doppelbindungen aus Olefinen, Cyclopentadien, Norbornadien, $\alpha$-Pinen, Polybuten, Acrylsäureestern, Maleinsäureestern (aschefrei bei Verbrennung); Organoschwefelverbindungen, wie zum Beispiel Dialkylsulfide, Diarylsulfide, Polysulfide, modifizierte Thiole, Thiophenderivate, Xanthate, Thioglycole, Thioaldehyde, schwefelenthaltende Carbonsäuren; heterocyclische Schwefel/Stickstoff-Verbindungen, insbesondere Dialkyldimercaptothiadiazole, 2-Mercaptobenzimidazole; Zink- und Methylen-bis(dialkyldithiocarbamat); Organophosphorverbindungen, wie zum Beispiel Triaryl- und Trialkylphosphite; Organokupferverbindungen sowie überbasische Calcium- und Magnesium-basierte Phenolate und Salicylate.

Zu den bevorzugten Verschleißschutz- (*antiwear AW*) und Extremdruckadditiven (*extreme pressure EP*) gehören unter anderem Phosphorverbindungen, wie zum Beispiel Trialkylphosphate, Triarylphosphate, z.B. Tricresylphosphat, Amin-neutralisierte Mono- und Dialkylphosphorsäureester, Ethoxylierte Mono- und Dialkylphosphorsäureester, Phosphite, Phosphonate, Phosphine; Verbindungen mit Schwefel und Phosphor, wie zum Beispiel Metalldithiophospate, z.B. Zink-$C_{3-12}$dialkyldithiophosphate (ZnDTP), Ammonium-, Antimon-, Molybdän-, Bleidialkyldithiophosphate, "OOS-Triester" = Reaktionsprodukte von Dithiophosphorsäure mit aktivierten Doppelbindungen aus Olefinen, Cyclopentadien, Norbornadien, □-Pinen, Polybuten, Acrylsäureestern, Maleinsäureestern, Triphenylphosphorothionat (TPPT); Verbindungen mit Schwefel und Stickstoff, wie zum Beispiel Zink-bis(amyldithiocarbamat) oder Methylen-bis(di-n-butyldithiocarbamat); Schwefelverbindungen mit elementarem Schwefel sowie $H_2S$ geschwefelte Kohlenwasserstoffe (Diisobutylen, Terpen); geschwefelte Glyceride und Fettsäureester; überbasische Sulfonate; Chlorverbindungen oder Feststoffe, wie Graphit oder Molybdändisulfid.

Eine weitere bevorzugte Gruppe von Additiven stellen Reibwertveränderer (*friction modifier*) dar. Als Reibwertveränderer können unter anderem mechanisch wirksame Verbindungen, wie zum Beispiel Molybdändisulfid, Graphit (auch fluoriert), Poly(trifluorethylen), Polyamid, Polyimid; Adsorptionsschichten bildende Verbindungen, wie zum Beispiel langkettige Carbonsäuren, Fettsäureester, Ether, Alkohole, Amine, Amide, Imide; Verbindungen, die durch tribochemische Reaktionen Schichten bilden, wie zum Beispiel gesättigte Fettsäuren, Phosphorsäure und Thiophosphorsäureester, Xanthogenate, geschwefelte Fettsäuren; Verbindungen, die polymerartige Schichten bilden, wie zum Beispiel ethoxylierte Dicarbonsäureteilester, Dialkylphthalsäureester, Methacrylate, ungesättigte Fettsäuren, geschwefelte Olefine oder organometallische Verbindungen, wie zum Beispiel Molybdänverbindungen (Molybdändithiophosphate und Molybdändithiocarbamate MoDTC) und ihre Kombinationen mit ZnDTP, Kupfer-haltige organische Verbindungen eingesetzt werden.

Einige der zuvor dargestellten Additive können multiple Funktionen erfüllen. ZnDTP z.B. ist primär ein Verschleißschutzadditiv und Extremdruckadditiv, hat aber auch den Charakter eines Antioxidationsmittels und Korrosionsinhibitors (hier: Metallpassivator/- desaktivator).

Die zuvor dargelegten Additive sind ausführlicher unter anderem in T. Mang, W. Dresel (eds.): "Lubricants and Lubrication", Wiley-VCH, Weinheim 2001; J. Bartz: "Additive für Schmierstoffe", Expert-Verlag, Renningen-Malmsheim 1994; R.M. Mortier, S.T. Orszulik (eds.): "Chemistry and Technology of Lubricants", Blackie Academic & Professional, London, 2nd ed. 1997 dargelegt.

Bevorzugte Schmierölzusammensetzungen weisen eine gemäß ASTM D 445 bei 40°C gemessenen Viskosität im Bereich von 10 bis 120 $mm^2/s$, besonders bevorzugt im Bereich von 15 bis 100 $mm^2/s$ auf. Die bei 100°C gemessene kinematische Viskosität $KV_{100}$ beträgt vorzugsweise mindestens 2,0 $mm^2/s$, besonders bevorzugt mindestens 3,5 $mm^2/s$ und ganz besonders bevorzugt mindestens 4,0 $mm^2/s$.

Gemäß einem besonderen Aspekt der vorliegenden Erfindung weisen bevorzugte Schmierölzusammensetzung einen gemäß ASTM D 2270 bestimmten Viskositätsindex im Bereich von 100 bis 500, besonders bevorzugt im Bereich 125 bis 400 und ganz besonders bevorzugt im Bereich von 150 bis 350 auf.

Die genannten Werte können gemäß einem besonderen Aspekt der vorliegenden Erfindung überraschend dadurch erzielt werden, dass überwiegend die erfindungsgemäßen Polyalkyl(meth)acrylate zur Verbesserung des Viskositätsindexes eingesetzt werden. Gemäß einer bevorzugten Ausgestaltung können daher vorzugsweise mindestens 20 Gew.-%, besonders bevorzugt mindestens 40 Gew.-% und speziell bevorzugt mindestens 60 Gew.-% der zur Verbesserung des Viskositätsindexes eingesetzten Verbindungen erfindungsgemäße Polyalkyl(meth)acrylate darstellen.

Von besonderem Interesse sind des Weiteren Schmierölzusammensetzungen, die eine bei 150°C gemessene Hochscherviskosität HTHS von mindestens 1,6 mPas, besonders bevorzugt mindestens 2,0 mPas aufweisen. Die bei 100°C gemessene Hochscherviskosität HTHS beträgt vorzugsweise höchstens 10 mPas, besonders bevorzugt höchstens 7 mPas und ganz besonders bevorzugt höchstens 5 mPas. Die Differenz der Hochscherviskositäten HTHS, die bei 100°C und 150°C gemessen werden, $HTHS_{10C}$ - $HTHS_{15C}$ beträgt vorzugsweise höchstens 4 mPas, besonders bevorzugt höchstens 3,3 mPas und ganz besonders bevorzugt höchstens 2,5 mPas. Das Verhältnis von Hochscherviskosität bei 100°C $HTHS_{10C}$ zu Hochscherviskosität bei 150°C $HTHS_{15C}$, $HTHS_{10C}/HTHS_{15C}$ beträgt vorzugsweise höchstens 2,0, besonders bevorzugt höchstens 1,9. Die Hochscherviskosität HTHS kann bei der jeweiligen Temperatur gemäß ASTM D4683 gemessen werden.

Gemäß einer zweckmäßigen Abwandlung kann der permanente Scherstabilitäts-Index (PSSI) nach ASTM D2603 Ref. B (12.5minütige Ultraschallbehandlung) kleiner oder gleich 50, besonders bevorzugt kleiner oder gleich 35 sein. Vorteilhaft können weiterhin Schmierölzusammensetzungen erhalten werden, die einen permanenten Scherstabilitäts-Index (PSSI) nach DIN 51381 (30 Zyklen Bosch-Pumpe) von höchstens 35, bevorzugt höchstens 25 und ganz besonders bevorzugt höchstens 5 aufweisen.

Der Verschleiß kann beispielsweise auf einem nach DIN 51350-3 oder DIN 51350-5 genormten Vier-Kugel-Apparat (VKA, *four-ball apparatus*) bestimmt werden, bei dem eine rotierende Kugel unter Last auf drei gleichartige fixierte Kugeln gepresst wird. Durch optisches Ausmessen der entstandenen Kalotten wird der Verschleiß bestimmt. Von den einzeln gemessenen Kalottendurchmessern wird für jede Laststufe (150N und 300N) der Mittelwert gebildet. Als Endergebnis wird die Summe der beiden Mittelwerte, resultierend aus mittlerem Kalottendurchmesser bei 150 N und 300 N, angegeben. Die Messung wird vorzugsweise bei Raumtemperatur gestartet, nach Beendigung des Tests beträgt die Temperatur üblicherweise nicht mehr als 60°C. Dieser Test wird nachfolgend als VKA-Test bezeichnet.

Bevorzugte Schmieröle der vorliegenden Erfindung erzielen bei einer Last von 300 N Abriebwerte (= mittlerer Kalottendurchmesser), gemäß den in den Beispielen dargelegten Durchschnittswerten von höchstens 0,3 mm, vorzugsweise höchstens 0,1 mm und besonders bevorzugt höchstens 0,05 mm.

Die vorliegenden Schmiermittel können insbesondere als Getriebeöl, Motoröl oder Hydrauliköl eingesetzt werden. Überraschende Vorteile lassen sich insbesondere bei Verwendung der vorliegenden Schmiermitteln in Handschalt-(*manual*), automatisierten Handschalt- (*automated manual*), Doppelkupplungs- (*double clutch*) bzw. Direktschaltgetrieben (DSG), Automatik- (*automatic*) und stufenlosen Getrieben (*continuous variable transmission* CVC) erzielen. Weiterhin können die vorliegenden Schmiermittel insbesondere in Verteilergetrieben (*transfer case*) und Achs- (*axle*) bzw. Differentialgetrieben (*differential*) eingesetzt werden.

Nachfolgend soll die vorliegende Erfindung anhand von Beispielen und Vergleichsbeispielen erläutert werden, ohne dass hierdurch eine Beschränkung erfolgen soll.

Beispiele und Vergleichsbeispiele

Methoden

Bestimmung des Reibwertes

Für Reibwertmessungen wurden alle Polymere in Nexbase 3060 (einem API Gruppe III Grundöl) auf 3,5 mPas im HTHS150 nach ASTM D 4683 eingestellt. Die Reibwertmessungen wurden auf einer Mini Traction Machine von PCS Instruments unter folgenden Bedingungen durchgeführt:

| | |
|---|---|
| Test Rig | MTM 2 von PCS Instruments |
| Scheibe | Stahl, AISI 52100, Durchmesser = 46 mm<br>RMS = 25 - 30 nm, Rockwell C<br>Härte = 63<br>Elastischer Modul = 207 GPa |
| Kugel | Stahl, AISI 52100, Durchmesser |
| | = 19,05 mm<br>RMS = 10 - 13 nm, Rockwell C<br>Härte = 58 - 65<br>Elastischer Modul = 207 GPa |
| Geschwindigkeit | 5 - 2500 mm/s |
| Temperatur | 100°C |
| Last | 30 N = 0,95 GPa max.<br>Hertz'scher Anpressdruck |
| Gleit-Rollverhältnis | 50% |

Zur Auswertung wird der Flächeninhalt (Integral) unter der ermittelten Reibwertkurve des Kandidaten ins Verhältnis zum Flächeninhalt des Referenzöles gesetzt. Als Referenzöl wird ein API-Gruppe III Öl ohne Zusatz filmbildender Polymere mit einer HTHS150 von 3,50 mPas verwendet. Für das Referenzöl betrug der Flächeninhalt 64,5 $mm*s^{-1}$ bei 100°C, siehe schraffierte Fläche in Abbildung 1. Bei 120°C betrug der Flächeninhalt für das Referenzöl nur noch 45,96 $mm*s^{-1}$.

Nach Ermitteln der Flächeninhalte der Kandidatenöle lässt sich die Reibwertminderung wie folgt berechnen:

Reibminderung (gesamt)

$$= \frac{\int_{5}^{2500} reibwerte_referenzöl - \int_{5}^{2500} reibwerte_kandidatenöl}{\int_{5}^{2500} reibwerte_referenzöl} * 100\%$$

Bei hohen Gleitgeschwindigkeiten ist der Reibwert üblicherweise sehr klein, da durch die hohe Geschwindigkeit viel Öl von den Reibflächen in den Schmierspalt eingetragen wird. Mit abnehmender Gleitgeschwindigkeit wird immer weniger Öl in den Schmierspalt eingetragen, und die Reibwerte steigen. Von besonderem Interesse ist es, die Reibwerte speziell auch bei niedrigen Gleitgeschwindigkeiten zu senken. Daher ist nicht nur die Reibminderung bezogen auf den gesamten Geschwindigkeitsbereich (5-2500 mm/s) von Interesse, sondern auch die Reibminderung bei niedrigen Gleitgeschwindigkeiten (2-200 mm/s). Die Reibminderung bei niedrigen Geschwindigkeiten berechnet sich demnach wie folgt:

Reibminderung (low speed)

$$= \frac{\int_{5}^{200} reibwerte_referenzöl - \int_{5}^{200} reibwerte_kandidatenöl}{\int_{5}^{200} reibwerte_referenzöl} * 100\%$$

Verschleißtest auf dem 4-Kugelapparat:

Der Shell-Vierkugel-Apparat (VKA) ist ein in DIN 51 350 Teil 1 genormtes Prüfgerät zur Bestimmung der Schweiß- und Gutkraft (DIN 51 350 Teil 2 und 3) sowie verschiedener Reib- und Verschleißkennwerte von Schmierstoffen (DIN 51 350 Teil 3 und 5). Bei der Standardprüfung wird eine rotierende Kugellagerkugel unter Last auf drei gleichartige aber stillstehende Kugeln gepresst. Der Prüfstand ist vor allem in der Schmierstoffindustrie weit verbreitet und wird dort routinemäßig zur Produktentwicklung und Qualitätskontrolle eingesetzt.

Der Verschleiß wird durch optisches Ausmessen der entstandenen Kalotten bestimmt. Von den einzeln gemessenen Kalottendurchmessern wird für jede Laststufe (150N und 300N) der Mittelwert gebildet. Als Endergebnis wird die Summe der beiden Mittelwerte, resultierend aus mittlerem Kalottendurchmesser bei 150 N und 300 N, angegeben.

Polymercharakterisierung:

Zur Charakterisierung der Polymere wurden die spezifischen Viskositäten in einem API Gruppe III Grundöl der Firma Neste (NEXBASE 3060) bei einer festen Polymerkonzentration bestimmt. Die bestimmten Werte sind in der unten abgebildeten Tabelle in mL/g angegeben.

Polymersynthese

Generelle Synthesevorschrift der erfindungsgemäßen Beispiele:

Die nachfolgende generelle Synthesevorschrift wurde bei allen erfindungsgemäßen Polymeren befolgt, die genaue Polymerzusammensetzung, Polymerisationstemperatur und Initiatorgehalt kann Tabelle 1 entnommen werden.

Aus den in Tabelle 1 angegebenen Monomeren des Basispolymeren wurde eine Mischung angesetzt. Das gesamte Polymerisationsöl (= Lösemittel bei der Polymerisation) wird im Reaktionskolben, der mit Innentemperaturregelung, Rührer, Stickstoffeinleitung und Kühler ausgestattet war, vorgelegt. Von der Monomermischung wurde so viel in die Vorlage des Reaktionskolbens gegeben, dass Öl und Monomermischung im Verhältnis 9:1 vorlagen. Anschließend wurde unter Rühren und Einleitung von Stickstoff auf Reaktionstemperatur aufgeheizt. Nach Erreichen der Reaktionstemperatur wurde mit der angegebenen Menge Initiator angefüttert und der Monomerzulauf gestartet.

Bei einigen Beispielen wurde ein Regler (n-Dodecylmercaptan nDDM) eingesetzt, welcher in angegebener Menge der Monomermischung (nur Basispolymer) beigemischt wurde.

Der Monomerzulauf bestand aus der restlichen Monomermischung mit der angegebenen Menge Initiator im Zulauf. Der Zulauf erfolgte gleichmäßig über 3.5 Stunden. 2 Stunden nach Zulaufende wurde ggf. nochmals mit 0.2% Initiator bei der angegebenen Reaktionstemperatur nachgefüttert.

Der Ansatz wurde so lange bei Reaktionstemperatur gehalten, dass mindestens 5 Halbwertszeiten des Initiators verstrichen waren.

Bei Durchführung einer Pfropfpolymerisation wurde anschließend auf 130°C aufgeheizt, die angegebene Menge Pfropfmonomer zugesetzt und die Pfropfreaktion mit 0.25% tert.-Butylperbenzoat (tBPB) gestartet. Die Menge an tBPB bezieht sich auf die Menge an Basispolymer zuzüglich des zugesetzten Pfropfmonomeren. 1 und 2 Stunden nach Beginn der Pfropfreaktion wird nochmals mit 0.125% tBPB nachgefüttert. Nach der letzten Initiatorzugabe wird noch mindestens 3 Stunden bei 130°C nachgerührt. Die in Tabelle 1 dargelegten Polymerisationen der Beispiele 1 bis 9 waren Pfropfpolymerisationen, wobei die Angabe in den eckigen Klammern die Zusammensetzung der Pfropfgrundlage beschreibt.

Tabelle 1: Angaben zur Herstellung der eingesetzten Polymere

| | Zusammensetzung des Polymeren [Gew.-%] | Feststoffgehalt* [%] | Initiator | nDDM [%] | Polymerisationstemperatur [°C] |
|---|---|---|---|---|---|
| Beispiel 1 | [pLMA-co-Sty-MMA]-g-MSA 86,3 - 9,7 - 1 - 3 | 70 | tBPO 0,27 % | 0,10 | 100 |
| Beispiel 2 | [pLMA-co-EHMA]-g-MSA 68, 4 - 30,1 - 1,5 | 70 | tBPO 0,20% | 0, 05 | 110 |
| Beispiel 3 | [pLMA-co-MMA]-g-MSA 87,3 - 9,7 - 3 | 70 | tBPO 0,24% | 0, 19 | 110 |
| Beispiel 4 | [pLMA-co-MMA-Sty]-g-MSA 86,3 - 9,7 - 1 - 3 | 55 | tBPO 0,35% | -- | 90 |
| Beispiel 5 | [pLMA-DPMA-SMA-MMA]-g-MSA 86,9 - 0,2 - 0,2 - 9,7 - 3 | 75 | tBPO 3,7% | 0,30 | 110 |
| Beispiel 6 | [pLMA-co-MMA-Sty-MSA]-g-NVP 80,7 - 8,2 - 0,9 - 0, 9 - 9,3 | 55 | tBPO 0,30% | -- | 90 |
| Beispie 1 7 | [pLMA-co-MMA-Sty-MSA]-g-MSA 94, 1 - 1 - 1 - 1 - 2,9 | 70 | tBPO 0,30% | -- | 100 |
| Beispie 1 8 | [pLMA-co-MMA-Sty-NVP]-g-MSA 94, 1 - 1 - 1 - 1 - 2,9 | 70 | tBPO 0,30% | -- | 100 |
| Beispie 1 9 | [pLMA-co-MMA-hPBDMA]-g-MAS 72 - 15 - 10 - 3 | 70 | tBPO 0,20% | -- | 100 |
| Beispie 1 10**) | pLMA-co-GLMA 95.9 - 4.1 | 70 | tBPO 0,25% | 0,9 0 | 100 |
| Beispie 1 11**) | pLMA-co-MMA-Sty-MSA 87 - 6 - 6 - 1 | 50 | tBPO 0,5% | -- | 100 |
| Beispie 1 12**) | pLMA-co-Sty-MSA 87 - 6 - 1 | 50 | tBPO 0,5% | -- | 100 |
| Beispie 1 13**) | pLMA-co-MMA-MSA 87 - 12 - 1 | 50 | tBPO 0,5% | -- | 100 |
| * nach Polymerisation<br>**) Vergleichsbeispiel | | | | | |

Die eingesetzten Monomere wurden wie folgt abgekürzt:

DPMA: Alkylmethacrylat, das 12 bis 15 C-Atome im Alkylrest aufweist
EHMA: Ethylhexylmethacrylat
GLMA: Glycidylmethacrylat
LMA: Alkylmethacrylat, das 12 bis 14 C-Atome im Alkylrest aufweist
MMA: Methylmethacrylat
MSA: Maleinsäureanhydrid
NVP: N-Vinylpyrrolidon
SMA: Alkylmethacrylat, das 16 bis 18 C-Atome im Alkylrest aufweist
Sty: Styrol

hPBDMA: Makromonomer: Methacrylat eines hydrierten Polybutadiens

Die erhaltenen Polymere wurden in einer polymeranalogen Umsetzung mit einem Amin derivatisiert. Die Umsetzung des in den Polymeren enthaltenen Maleinsäureanhydrids (MSA) oder Glycidylmethacrylates mit den in Tabelle 2 aufgeführten Aminen N-Phenyl-1,4-Phenylendiamin (DPA) oder N,N-Dimethylamino-propylamin (DMAPA) erfolgte bei ca. 140°C. Das Amin wurde in äquimolarer Menge zu MSA oder GLMA zugesetzt. Das Amin wurde entweder in reiner Form zugegeben oder in einem geeigneten Lösemittel verdünnt. Bevorzugt sind z.B. Butylacetat oder Plastomoll DNA. Eventuell entstandenes Wasser wurde durch Einblasen von trockenem Stickstoff ausgetrieben. Leicht flüchtige Lösemittel wie Butylacetat, sofern solche verwendet werden, müssen nach der Umsetzung wieder im Vakuum abdestilliert werden. Die erfindungsgemäßen, fertig umgesetzten Polymere wurden nach dem Ende der Reaktion auf den angegebenen Polymergehalt verdünnt und ggf. über eine Tiefenfilterschicht druckfiltriert. Die eingesetzten Amine und die erhaltenen Zusammensetzungen sind in Tabelle 2 dargelegt.

Tabelle 2

| | Amin | Polymergehalt Endprodukt[%] | η sp/c 100°C in NB 3060 |
|---|---|---|---|
| Beispiel 1 | DPA | 58,4 | 22,28 mL/g |
| Beispiel 2**) | DMAPA | 60 | 24,88 mL/g |
| Beispiel 3 | DPA | 58, 6 | 21,12 mL/g |
| Beispiel 4 | DPA | 50, 6 | 23,40 mL/g |
| Beispiel 5 | DPA | 62,1 | 6,29 mL/g |
| Beispiel 6**) | DMAPA | 40 | nicht bestimmt |
| Beispiel 7 | DPA | 50 | nicht bestimmt |
| Beispiel 8 | DPA | 50 | nicht bestimmt |
| Beispiel 9 | DPA | 45 | 28, 98 |
| Beispiel 10**) | DPA | 50 | 10,29 |
| Beispiel 11**) | DPA | 48, 6 | 14,48 |
| Beispiel 12**) | DPA | 48, 6 | 16,19 |
| Beispiel 13**) | DPA | 48, 6 | 15, 61 |
| **) Vergleichsbeispiel | | | |

Die zuvor dargelegten, mit den Aminen gemäß Tabelle 2 umgesetzten Polymere der Beispiele 1 bis 5 wurden gemäß obigen Methoden untersucht. Weiterhin wurde der Viskositätsindex von Schmierölzusammensetzungen bestimmt, wobei diese Daten in Tabelle 3 beschrieben sind. Die erhaltenen Werte in Bezug auf die Reibwertverbesserung sind in Tabelle 4 dargelegt. Die unter Referenz angegebenen Messwerte beziehen sich auf das eingesetzte Grundöl.

Tabelle 3: Viskositätsdaten

| | Formulierung | KV40°C [$mm^2/s$] | KV100°C [$mm^2/s$] | VI |
|---|---|---|---|---|
| Beispiel 1 | 8,0% in Nexbase 3060 | 66,42 | 13,20 | 205 |
| Beispiel 2**) | 7,65% in Nexbase 3060 | 68, 80 | 13,01 | 193 |
| Beispiel 3 | 8,6% in Nexbase 3060 | 67, 80 | 13,34 | 203 |
| Beispiel 4 | 8,15% in Nexbase 3060 | 44,08 | 9,86 | 203 |
| Beispiel 5 | 20, 7% in Nexbase 3060 | 67, 12 | 11,48 | 166 |
| Beispiel 7 | 9, 6% in RMF 5/2 (150 N Öl) | 95,06 | 16,39 | 186 |
| Beispiel 8 | 9, 6% in RMF 5/2 (150 N Öl) | 111,1 | 18, 68 | 189 |
| Beispiel 9 | 10,67% in RMF 5/2 (150 N Öl) | 101,7 | 20,39 | 226 |
| Beispiel 10**) | 13,5% in Nexbase 3060 | 60,57 | 11,57 | 189 |

(fortgesetzt)

| | Formulierung | KV40°C [mm$^2$/s] | KV100°C [mm$^2$/s] | VI |
|---|---|---|---|---|
| Beispiel 11**) | 11,8% in Nexbase 3060 | 57,59 | 11,13 | 190 |
| Beispiel 12**) | 10,6% in Nexbase 3060 | 58,58 | 11, 07 | 185 |
| Beispiel 13**) | 11% in Nexbase 3060 | 55,31 | 11, 12 | 199 |
| **) Vergleichsbeispiel | | | | |

Nexbase 3060 ist ein kommerziell erhältliches Gruppe III Öl RMF 5/2 ist ein kommerzielles 150 N Öl

Weiterhin zeigen die erfindungsgemäßen Schmiermittel eine ausgezeichnete bei 150 °C gemessene Hochscherviskosität HTHS, wobei die für einige Beispiele bestimmten Werte im Bereich von 3,19 (Beispiel 12) bis 3,83 (Beispiel 5) liegen.

Tabelle 4: Reibwerte

| | Fläche Gesamt | Fläche Low Speed | Reibverbesserung Gesamt in % | Reibverbesserung Low Speed in % |
|---|---|---|---|---|
| Referenz | 64,51 | 9,25 | 0,0 | 0,0 |
| Beispie 11 | 53,83 | 5,02 | 16,6 | 45,7 |
| Beispie 12**) | 61,40 | 6,91 | 4,8 | 25,3 |
| Beispie 13 | 54,58 | 5,47 | 15,4 | 40,9 |
| Beispie 14 | 52,29 | 4,92 | 18,9 | 46,8 |
| Beispie 15 | 55,07 | 5,16 | 14,6 | 44,2 |
| **) Vergleichsbeispiel | | | | |

Die Ergebnisse in Tabelle 4 zeigen deutlich, dass die erfindungsgemäßen Polymere zu einer deutlichen Absenkung der Reibwerte führen. Besonders im Bereich der niedrigen Gleitgeschwindigkeiten, die in den reellen Anwendungen oft auftreten und daher von besonderem Interesse sind, sind Reibwertminderungen von mehr als 50% erreichbar.

Die Ergebnisse zeigen weiterhin, dass styrolhaltige Polymere ein besseres Reibverhalten zeigen, als die entsprechenden styrolfreien Produkte. Selbst geringe Mengen Styrol von beispielsweise 1% zeigen eine deutliche Wirkung, vgl. Beispiel 4 (1% Styrol) mit Beispielen 2 und 3 (ohne Styrol).

Weiterhin wurde die Kompatibilität der erfindungsgemäßen Polymere mit handelsüblichen PIB-Succinimiden (Infinieum C9201) untersucht.

Hierzu wurde 1 Gew.-% (Aktivsubstanz) eines handelsüblichen PIB-Succinimides (Infinieum C9201) zugesetzt. Die Reibwert-Messungen wurden wie oben beschrieben durchgeführt und ausgewertet, die Messtemperatur betrug jedoch 120°C. Die Ergebnisse der Auswertung sind in Tabelle 5 zusammengefasst.

Tabelle 5: Reibwerte mit und ohne Zusatz von PIB-Succinimid

| | Fläche Gesamt ohne PIBSI | Fläche Low Speed ohne PIBSI | Fläche Gesamt mit PIBSI | Fläche Low Speed mit PIBSI |
|---|---|---|---|---|
| Referenz | 45,96 | 8,43 | 45,96 | 8,43 |
| Beispiel 5 | 41,75 | 6,06 | 42,62 | 5,98 |

Die Ergebnisse zeigen, dass das vorliegende Copolymer die ausgezeichnete Reibwertverbesserung auch bei Zusatz von PIBSI im Wesentlichen beibehält und im niedrigen Geschwindigkeitsbereich eine leichte Verbesserung desselben gemessen werden kann.

Weiterhin wurde das Verschleißverhalten in einem voll formulierten Öl unter Zusatz eines kommerziell verfügbaren aschefreien Verschleißschutzpaketes bestimmt. Hierbei wurde das erfindungsgemäße Polymer gemäß Beispiel 1 in einer Mischung aus APE Core 80N : APE Core 150N = 70:30 auf eine KV100 von 9,50 mm$^2$/s eingestellt. Das Öl enthielt ca. 0,90 Gew% des genannten aschefreien Verschleißschutzpaketes. Die Ergebnisse des Verschleißtests sind

in Tabelle 6 dargestellt. Wenn als Ergebnis ein Kalottendurchmesser von 0,00 mm angegeben ist, so war keine Kalotte auf der Kugel sichtbar (= kein Verschleiß, nur vernachlässigbare, nicht messbare plastische Verformung). Das Öl wurde bei jeder Laststufe doppelt bestimmt:

Tabelle 6: Verschleißdaten

| | Polymer gemäß Beispiel 1 | |
|---|---|---|
| Last | 150 N | 300 N |
| Kugel 1 | 0,00 / 0,00 | 0, 10 / 0, 10 |
| Kugel 2 | 0,00 / 0,00 | 0, 00 / 0, 00 |
| Kugel 3 | 0,00 / 0,00 | 0, 00 / 0, 00 |
| Kugel 4 | 0,00 / 0,00 | 0, 00 / 0, 00 |
| Kugel 5 | 0,00 / 0,00 | 0, 00 / 0, 00 |
| Kugel 6 | 0,00 / 0,00 | 0, 00 / 0, 00 |
| | | |
| Durchschnitt | 0,00 / 0,00 | 0,017 / 0, 017 |
| Ergebnis | 0,00 | 0,034 |
| Summe | 0,03 mm | |

**Patentansprüche**

1. Polyalkyl(meth)acrylat zur Verbesserung von Schmieröleigenschaften, umfassend Wiederholungseinheiten, die von (Meth)acrylaten mit 6 bis 22 Kohlenstoffatomen im Alkoholrest abgeleitet sind, **dadurch gekennzeichnet, dass** das Polymer ein Pfropfcopolymer ist, wobei die Pfropfgrundlage

a) 0 bis 40 Gew.-% an Wiederholungseinheiten umfasst, die von (Meth)acrylaten der Formel (I) abgeleitet sind

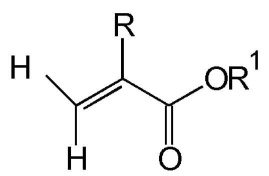
(I),

worin R Wasserstoff oder Methyl darstellt und $R^1$ einen Alkylrest mit 1 bis 5 Kohlenstoffatomen bedeutet,
b) 20 bis 99,9 Gew.-% an Wiederholungseinheiten umfasst, die von (Meth)acrylaten der Formel (II) abgeleitet sind

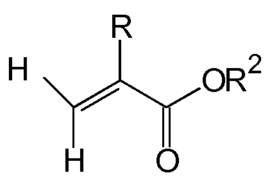
(II),

worin R Wasserstoff oder Methyl darstellt und $R^2$ einen Alkylrest mit 6 bis 22 Kohlenstoffatomen bedeutet,
c) 0 bis 20 Gew.-% an Wiederholungseinheiten umfasst, die von (Meth)acrylaten der Formel (III) abgeleitet sind

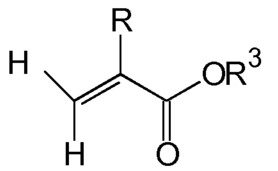

(III),

worin R Wasserstoff oder Methyl darstellt und $R^3$ einen Alkylrest mit 23 bis 4000 Kohlenstoffatomen bedeutet, un d die Pfropfauflage 0,1 bis 10 Gew.-% an Wiederholungseinheiten umfasst, die von Amin-Derivaten eines polaren ethylenisch ungesättigten Monomeren abgeleitet sind, wobei das polare ethylenisch ungesättigte Monomer, von welchem das Amin-Derivat abgeleitet ist, Maleinsäure, Maleinsäureanhydrid oder ein Maleinsäurederivat ist und das Amin-Derivat von N-Phenyl-1,4-Phenylendiamin abgeleitet ist.

**2.** Polyalkyl(meth)acrylat gemäß Anspruch 1, **dadurch gekennzeichnet, dass** das Maleinsäurederivat Maleinsäuremonoster oder Maleinsärediester ist.

**3.** Polyalkyl(meth)acrylat gemäß Anspruch 1, **dadurch gekennzeichnet, dass** das das polare ethylenisch ungesättigte Monomer Maleinsäureanhydrid ist.

**4.** Polyalkyl(meth)acrylat gemäß mindestens einem der vorhergehenden Ansprüche, **dadurch gekennzeichnet, dass** das Polyalkyl(meth)acrylat eine spezifische Viskosität im Bereich von 5 bis 35 mL/g bei 100°C aufweist.

**5.** Polyalkyl(meth)acrylat gemäß mindestens einem der vorhergehenden Ansprüche, **dadurch gekennzeichnet, dass** das Polyalkyl(meth)acrylat Wiederholungseinheiten umfasst, die von Styrolmonomeren, heterocyclischen Monomeren, die ausgewählt sind aus der Gruppe bestehend aus 2-Vinylpyridin, 3-Vinylpyridin, 4-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, N-Vinylimidazol, 2-Methyl-1-vinylimidazol, N-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole, hydrierte Vinylthiazole, Vinyloxazole und hydrierte Vinyloxazole, Vinylether und/oder Vinylester abgeleitet sind.

**6.** Polyalkyl(meth)acrylat gemäß Anspruch 5, **dadurch gekennzeichnet, dass** das Polyalkyl(meth)acrylat 0,1 bis 20 Gew.-% an Wiederholungseinheiten umfasst, die von Styrolmonomeren, heterocyclischen Monomeren, Vinylether und/oder Vinylester abgeleitet sind.

**7.** Polyalkyl(meth)acrylat gemäß Anspruch 5 oder 6, **dadurch gekennzeichnet, dass** die Styrolmonomere ausgewählt sind aus der Gruppe bestehend aus Styrol, substituierten Styrolen mit einem Alkylsubstituenten in der Seitenkette, substituierten Styrolen mit einem Alkylsubstitutenten am Ring und halogenierten Styrolen.

**8.** Polyalkyl(meth)acrylat gemäß mindestens einem der vorhergehenden Ansprüche, **dadurch gekennzeichnet, dass** das Polyalkyl(meth)acrylat

a) 0 bis 40 Gew.-% an Wiederholungseinheiten umfasst, die von (Meth)acrylaten der Formel (I) abgeleitet sind

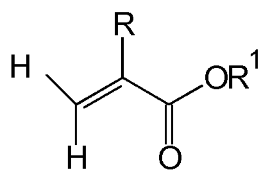

(I),

worin R Wasserstoff oder Methyl darstellt und $R^1$ einen Alkylrest mit 1 bis 5 Kohlenstoffatomen bedeutet,
b) 50 bis 99,9 Gew.-% an Wiederholungseinheiten umfasst, die von (Meth)acrylaten der Formel (II) abgeleitet sind

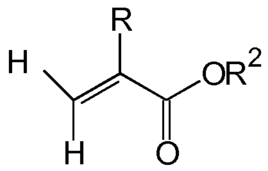

(II),

worin R Wasserstoff oder Methyl darstellt und $R^2$ einen Alkylrest mit 6 bis 22 Kohlenstoffatomen bedeutet,
c) 0,5 bis 20 Gew.-% an Wiederholungseinheiten umfasst, die von (Meth)acrylaten der Formel (III) abgeleitet sind

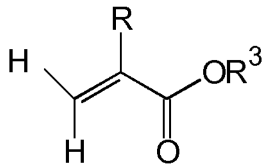

(III),

worin R Wasserstoff oder Methyl darstellt und $R^3$ einen Alkylrest mit 23 bis 4000 Kohlenstoffatomen bedeutet, und
d) 0,1 bis 10 Gew.-% an Wiederholungseinheiten, die von Amin-Derivaten eines polaren ethylenisch ungesättigten Monomeren abgeleitet sind, umfasst.

9. Verfahren zur Herstellung eines Polyalkyl(meth)acrylats gemäß mindestens einem der Ansprüche 1 bis 8, **dadurch gekennzeichnet, dass** zunächst eine Pfropfgrundlage durch Polymerisation von (Meth)acrylaten mit 6 bis 22 Kohlenstoffatomen hergestellt wird, auf die nachfolgend polare ethylenisch ungesättigte Monomere gepfropft werden.

10. Schmierstoffzusammensetzung enthaltend mindestens ein Polyalkyl(meth)acrylat gemäß mindestens einem der Ansprüche 1 bis 8 oder erhältlich gemäß einem Verfahren nach Anspruch 9.

11. Schmierstoffzusammensetzung gemäß Anspruch 10, **dadurch gekennzeichnet, dass** die Schmierstoffzusammensetzung 0,01 bis 30 Gew.-% Polyalkyl(meth)acrylat gemäß mindestens einem der Ansprüche 1 bis 8 oder erhältlich gemäß einem Verfahren nach Anspruch 9 umfasst.

12. Verwendung eines Polyalkyl(meth)acrylats gemäß mindestens einem der Ansprüche 1 bis 8 oder erhältlich gemäß einem Verfahren nach Anspruch 9 zur Verringerung der Reibung.

## Claims

1. Polyalkyl(meth)acrylate for improvement of lubricant oil properties, comprising repeat units derived from (meth)acrylates having 6 to 22 carbon atoms in the alcohol radical, **characterized in that** the polymer is a graft copolymer where the graft base comprises

a) 0 to 40% by weight of repeat units derived from (meth)acrylates of the formula (I)

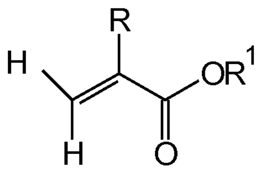

(I)

in which R is hydrogen or methyl and $R^1$ is an alkyl radical having 1 to 5 carbon atoms,
b) 20 to 99.9% by weight of repeat units derived from (meth)acrylates of the formula (II)

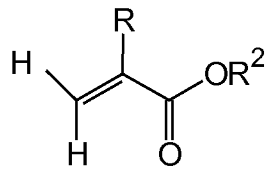

(II)

in which R is hydrogen or methyl and $R^2$ is an alkyl radical having 6 to 22 carbon atoms,
c) 0 to 20% by weight of repeat units derived from (meth)acrylates of the formula (III)

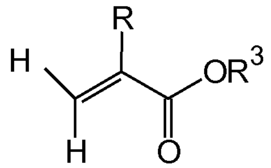

(III)

in which R is hydrogen or methyl and $R^3$ is an alkyl radical having 23 to 4000 carbon atoms, and the graft comprises 0.1 to 10% by weight of repeat units derived from amine derivatives of a polar ethylenically unsaturated monomer, where the polar ethylenically unsaturated monomer from which the amine derivative is derived is maleic acid, maleic anhydride or a maleic acid derivative and the amine derivative is derived from N-phenyl-1,4-phenylenediamine.

**2.** Polyalkyl(meth)acrylate according to Claim 1, **characterized in that** the maleic acid derivative is maleic monoester or maleic diester.

**3.** Polyalkyl(meth)acrylate according to Claim 1, **characterized in that** the polar ethylenically unsaturated monomer is maleic anhydride.

**4.** Polyalkyl(meth)acrylate according to at least one of the preceding claims, **characterized in that** the polyalkyl(meth)acrylate has a specific viscosity in the range from 5 to 35 ml/g at 100°C.

**5.** Polyalkyl(meth)acrylate according to at least one of the preceding claims, **characterized in that** the polyalkyl(meth)acrylate comprises repeat units derived from styrene monomers, heterocyclic monomers selected from the group consisting of 2-vinylpyridine, 3-vinylpyridine, 4-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, N-vinylimidazole, 2-methyl-l-vinylimidazole, N-vinylpyrrolidone, N-vinylpyrrolidine, 3-vinylpyrrolidine, N-vinylcaprolactam, N-vinylbutyrolactam, vinyloxolane, vinylfuran, vinylthiophene, vinylthiolane, vinylthiazoles, hydrogenated vinylthiazoles, vinyloxazoles and hydrogenated vinyloxazoles, vinyl ethers and/or vinyl esters.

**6.** Polyalkyl(meth)acrylate according to Claim 5, **characterized in that** the polyalkyl(meth)acrylate comprises 0.1 to 20% by weight of repeat units derived from styrene monomers, heterocyclic monomers, vinyl ethers and/or vinyl esters.

**7.** Polyalkyl(meth)acrylate according to Claim 5 or 6, **characterized in that** the styrene monomers are selected from the group consisting of styrene, substituted styrenes having an alkyl substituent in the side chain, substituted styrenes having an alkyl substituent on the ring and halogenated styrenes.

**8.** Polyalkyl(meth)acrylate according to at least one of the preceding claims, **characterized in that** the polyalkyl(meth)acrylate comprises

a) 0 to 40% by weight of repeat units derived from (meth)acrylates of the formula (I)

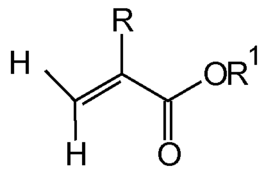

(I)

in which R is hydrogen or methyl and $R^1$ is an alkyl radical having 1 to 5 carbon atoms,

b) 50 to 99.9% by weight of repeat units derived from (meth)acrylates of the formula (II)

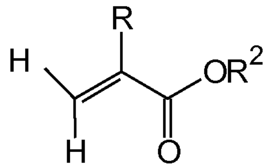

(II)

in which R is hydrogen or methyl and $R^2$ is an alkyl radical having 6 to 22 carbon atoms,

c) 0.5 to 20% by weight of repeat units derived from (meth)acrylates of the formula (III)

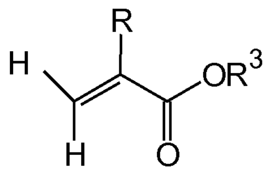

(III)

in which R is hydrogen or methyl and $R^3$ is an alkyl radical having 23 to 4000 carbon atoms, and

d) 0.1 to 10% by weight of repeat units derived from amine derivatives of a polar ethylenically unsaturated monomer.

**9.** Process for preparing a polyalkyl(meth)acrylate according to at least one of Claims 1 to 8, **characterized in that** a graft base is first prepared by polymerizing (meth)acrylates having 6 to 22 carbon atoms, onto which polar ethylenically unsaturated monomers are subsequently grafted.

**10.** Lubricant composition comprising at least one polyalkyl(meth)acrylate according to at least one of Claims 1 to 8 or obtainable by a process according to Claim 9.

**11.** Lubricant composition according to Claim 10, **characterized in that** the lubricant composition comprises 0.01 to 30% by weight of polyalkyl(meth)acrylate according to at least one of Claims 1 to 8 or obtainable by a process according to Claim 9.

**12.** Use of a polyalkyl(meth)acrylate according to at least one of Claims 1 to 8 or obtainable by a process according to Claim 9 for reducing friction.

**Revendications**

**1.** Poly(méth)acrylate d'alkyle pour l'amélioration de propriétés d'huiles lubrifiantes, comprenant des unités de répétition qui sont dérivées de (méth)acrylates contenant 6 à 22 atomes de carbone dans le radical alcool, **caractérisé en ce que** le polymère est un copolymère greffé, la base de greffage comprenant :

a) 0 à 40 % en poids d'unités de répétition qui sont dérivées de (méth)acrylates de formule (I)

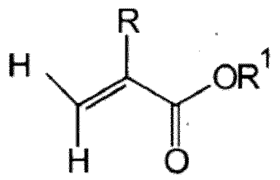

(I)

dans laquelle R représente hydrogène ou méthyle et $R^1$ signifie un radical alkyle contenant 1 à 5 atomes de carbone,

b) 20 à 99,9 % en poids d'unités de répétition qui sont dérivées de (méth)acrylates de formule (II)

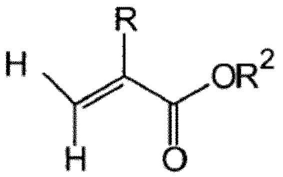

(II)

dans laquelle R représente hydrogène ou méthyle et $R^2$ signifie un radical alkyle contenant 6 à 22 atomes de carbone,

c) 0 à 20 % en poids d'unités de répétition qui sont dérivées de (méth)acrylates de formule (III)

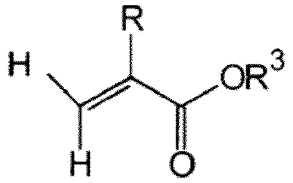

(III)

dans laquelle R représente hydrogène ou méthyle et $R^3$ signifie un radical alkyle contenant 23 à 4 000 atomes de carbone,

et la charge de greffage comprend 0,1 à 10 % en poids d'unités de répétition qui sont dérivées de dérivés d'amine d'un monomère polaire éthyléniquement insaturé, le monomère polaire éthyléniquement insaturé duquel le dérivé d'amine est dérivé étant l'acide maléique, l'anhydride de l'acide maléique ou un dérivé de l'acide maléique, et le dérivé d'amine étant dérivé de N-phényl-1,4-phénylène-diamine.

2. Poly(méth)acrylate d'alkyle selon la revendication 1, **caractérisé en ce que** le dérivé de l'acide maléique est un monoester de l'acide maléique ou un diester de l'acide maléique.

3. Poly(méth)acrylate d'alkyle selon la revendication 1, **caractérisé en ce que** le monomère polaire éthyléniquement insaturé est l'anhydride de l'acide maléique.

4. Poly(méth)acrylate d'alkyle selon au moins l'une quelconque des revendications précédentes, **caractérisé en ce que** le poly(méth)acrylate d'alkyle présente une viscosité spécifique dans la plage allant de 5 à 35 ml/g à 100 °C.

5. Poly(méth)acrylate d'alkyle selon au moins l'une quelconque des revendications précédentes, **caractérisé en ce que** le poly(méth)acrylate d'alkyle comprend des unités de répétition qui sont dérivées de monomères de styrène, de monomères hétérocycliques, qui sont choisis dans le groupe constitué par la 2-vinylpyridine, la 3-vinylpyridine, la 4-vinylpyridine, la 2-méthyl-5-vinylpyridine, la 3-éthyl-4-vinylpyridine, la 2,3-diméthyl-5-vinylpyridine, la vinylpyrimidine, la vinylpipéridine, le 9-vinylcarbazole, le 3-vinylcarbazole, le 4-vinylcarbazole, le 1-vinylimidazole, le N-vinylimidazole, le 2-méthyl-1-vinylimidazole, la N-vinylpyrrolidone, la N-vinylpyrrolidine, la 3-vinylpyrrolidine, le N-vinylcaprolactame, le N-vinylbutyrolactame, le vinyloxolane, le vinylfurane, le vinylthiophène, le vinylthiolane, les vinylthiazoles, les vinylthiazoles hydrogénés, les vinyloxazoles et les vinyloxazoles hydrogénés, les éthers de vinyle et/ou les esters de vinyle.

6. Poly(méth)acrylate d'alkyle selon la revendication 5, **caractérisé en ce que** le poly(méth)acrylate d'alkyle comprend 0,1 à 20 % en poids d'unités de répétition qui sont dérivées de monomères de styrène, de monomères hétérocycliques, d'éthers de vinyle et/ou d'esters de vinyle.

**7.** Poly(méth)acrylate d'alkyle selon la revendication 5 ou 6, **caractérisé en ce que** les monomères de styrène sont choisis dans le groupe constitué par le styrène, les styrènes substitués avec un substituant alkyle dans la chaîne latérale, les styrènes substitués avec un substituant alkyle sur le cycle et les styrènes halogénés.

**8.** Poly(méth)acrylate d'alkyle selon au moins l'une quelconque des revendications précédentes, **caractérisé en ce que** le poly(méth)acrylate d'alkyle comprend

a) 0 à 40 % en poids d'unités de répétition qui sont dérivées de (méth)acrylates de formule (I)

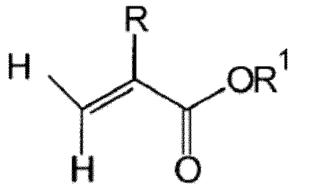
(I)

dans laquelle R représente hydrogène ou méthyle et $R^1$ signifie un radical alkyle contenant 1 à 5 atomes de carbone,
b) 50 à 99,9 % en poids d'unités de répétition qui sont dérivées de (méth)acrylates de formule (II)

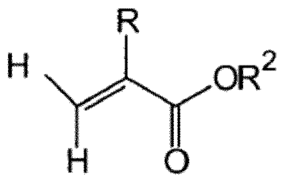
(II)

dans laquelle R représente hydrogène ou méthyle et $R^2$ signifie un radical alkyle contenant 6 à 22 atomes de carbone,
c) 0,5 à 20 % en poids d'unités de répétition qui sont dérivées de (méth)acrylates de formule (III)

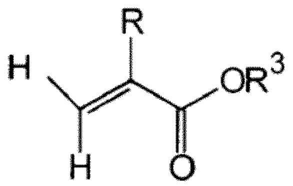
(III)

dans laquelle R représente hydrogène ou méthyle et $R^3$ signifie un radical alkyle contenant 23 à 4 000 atomes de carbone,
et
d) 0,1 à 10 % en poids d'unités de répétition qui sont dérivées de dérivés d'amine d'un monomère polaire éthyléniquement insaturé.

**9.** Procédé de fabrication d'un poly(méth)acrylate d'alkyle selon au moins l'une quelconque des revendications 1 à 8, **caractérisé en ce qu'**une base de greffage est tout d'abord fabriquée par polymérisation de (méth)acrylates contenant 6 à 22 atomes de carbone, sur laquelle des monomères polaires éthyléniquement insaturés sont ensuite greffés.

**10.** Composition lubrifiante contenant au moins un poly(méth)acrylate d'alkyle selon au moins l'une quelconque des revendications 1 à 8 ou pouvant être obtenu par un procédé selon la revendication 9.

**11.** Composition lubrifiante selon la revendication 10, **caractérisée en ce que** la composition lubrifiante comprend 0,01 à 30 % en poids d'un poly(méth)acrylate d'alkyle selon au moins l'une quelconque des revendications 1 à 8 ou pouvant être obtenu par un procédé selon la revendication 9.

**12.** Utilisation d'un poly(méth)acrylate d'alkyle selon au moins l'une quelconque des revendications 1 à 8 ou pouvant

être obtenu par un procédé selon la revendication 9 pour la réduction du frottement.

Abbildung 1

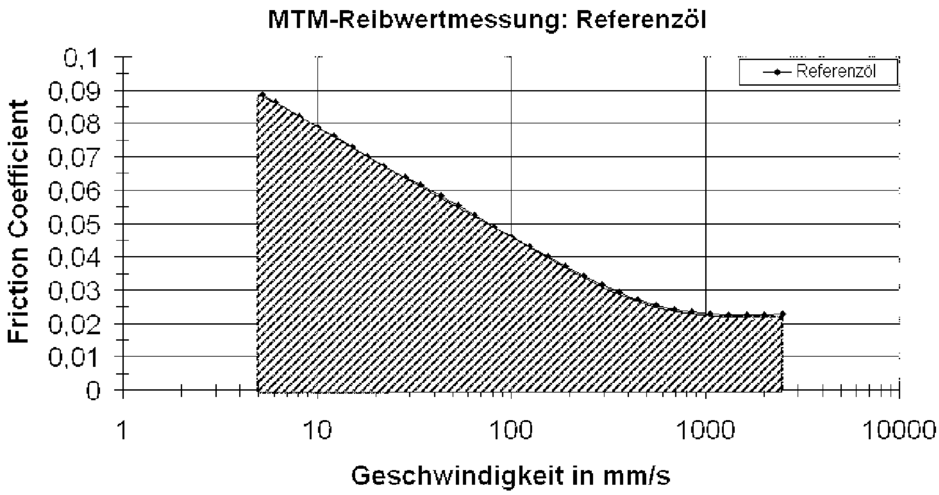
MTM-Reibwertmessung: Referenzöl
Referenzöl
Friction Coefficient
0,1
0,09
0,08
0,07
0,06
0,05
0,04
0,03
0,02
0,01
0
1
10
100
1000
10000
Geschwindigkeit in mm/s

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2004087850 A1
- WO 2006105926 A1
- WO 2009019065 A2
- DE 102007031247 A1
- WO 2007070845 A2
- US 20040254080 A1
- US 5942471 A
- DE 102007032120 A1
- DE 102007032120
- DE 102007046223 A1
- DE 102007046223
- US 6746993 B
- US 10212784 B
- US 2004077509 A
- US 10632108 B
- WO 9630421 A
- WO 9747661 A
- WO 9718247 A
- WO 9840415 A
- WO 9910387 A
- WO 9801478 A
- WO 2004083169 A
- US 4581429 A


### In der Beschreibung aufgeführte Nicht-Patentliteratur


- Chemistry and Technology of Lubricants. Blackie Academic & Professional, 1997
- **J-S. WANG et al.** *J.Am.Chem.Soc.,* 1995, vol. 117, 5614-5615
- **MATYJASZEWSKI.** *Macromolecules,* 1995, vol. 28, 7901-7910
- **K. MATYJASZEWSKI ; T. P. DAVIS.** Handbook of Radical Polymerization. Wiley Interscience, 2002
- Ullmanns's Encyclopedia of Industrial Chemistry
- Lubricants and Lubrication. Wiley-VCH, 2001
- **J. BARTZ.** Additive für Schmierstoffe. Expert-Verlag, 1994